# EUROPEAN PATENT APPLICATION

(11) **EP 4 369 176 A1**
(43) Date of publication of application: **15.05.2024**
(21) Application number: 22863411.9
(22) Date of filing: 29.08.2022
(51) Int. Cl.: G06F 3/14

(54) **DISPLAY METHOD, APPARATUS, DEVICE, AND STORAGE MEDIUM**

(30) Priority: 30.08.2021 CN 202111005587
(71) Applicant: Huawei Technologies Co., Ltd., Shenzhen, Guangdong 518129 (CN)
(72) Inventor: LI, Chundong, Shenzhen, Guangdong 518129 (CN)
(74) Representative: Epping - Hermann - Fischer
(86) International application number: PCT/CN2022/115633
(87) International publication number: WO 2023/030276

(57) **Abstract**

This application provides a display method and apparatus, a device, and a storage medium, and relates to the field of communication technologies. The method includes: A terminal device displays an interface of a first application, where the interface of the first application includes a first link. The terminal device receives a first operation, where the first operation is an operation of opening the first link. The terminal device obtains, in response to the first operation, an access page of the first link by using a second application, and displays the access page of the first link on the interface of the first application. The access page of the first link is embedded in the interface of the first application for display, so that the interface of the first application is not blocked when the access page of the first link is displayed.

## Description

This application claims priority to Chinese Patent Application No. 202111005587.1, filed with the China National Intellectual Property Administration on August 30, 2021 and entitled "DISPLAY METHOD AND APPARATUS, DEVICE, AND STORAGE MEDIUM", which is incorporated herein by reference in its entirety.

### TECHNICAL FIELD

Embodiments of this application relate to the field of communication technologies, and in particular, to a display method and apparatus, a device, and a storage medium

### BACKGROUND

An application that has a social attribute (or has a function of sending and receiving information), for example, a chat application or a mailbox, may provide a function of sharing a link for a user. For example, in a process in which the user uses the chat application on a terminal device, the terminal device may receive a link shared by another user. The link may be displayed on an interface of the chat application as a part of chat content. The user may tap the link to trigger the terminal device to display an access page (or referred to as a window corresponding to the link) of the link. The access page of the link may be a page in another application. The another application may be referred to as an application corresponding to the link. The page may include data of types such as a text, a picture, an audio, a video, and a web page.

When the user taps the link, if the application corresponding to the link is installed on the terminal device, the terminal device may jump to, in response to an operation of tapping the link by the user, the application corresponding to the link to display the access page of the link. If the application corresponding to the link is not installed on the terminal device, the terminal device may jump to, in response to an operation of tapping the link by the user, a default application (for example, a browser) to display the access page of the link.

Currently, when the terminal device jumps to the application corresponding to the link or the default application to display the access page of the link, the access page of the link is usually displayed in full screen or displayed in a form of a floating window. Consequently, the original interface of the chat application is blocked.

### SUMMARY

Embodiments of this application provide a display method and apparatus, a device, and a storage medium, so that when a terminal device opens an access page of a link, the access page does not block an application interface in which an original link is located.

According to a first aspect, an embodiment of this application provides a display method, where the method includes: A terminal device displays an interface of a first application, where the interface of the first application includes a first link; the terminal device receives a first operation, where the first operation is an operation of opening the first link; and the terminal device obtains, in response to the first operation, an access page of the first link by using a second application, and displays the access page of the first link on the interface of the first application.

In this application, for the first link included in the interface of the first application installed on the terminal device, after the terminal device detects the first operation of opening the link, the terminal device may obtain the access page of the first link by using the second application, and display the access page of the first link on the interface of the first application. This enables the access page of the first link to be displayed without blocking the interface of the first application. For example, the first application may be a chat application, the first link may be a sharing link received by a user in a chat process, and the second application may be an application corresponding to the sharing link. According to the display method provided in this application, an access page of the sharing link can be displayed on the interface of the chat application, and the interface of the chat application is not blocked when the access page of the sharing link is displayed. User experience can be better.

In an implementation, that the terminal device displays the access page of the first link on the interface of the first application includes: The terminal device replaces a picture at a position of the first link on the interface of the first application with the access page of the first link.

Optionally, that the terminal device replaces a picture at a position of the first link on the interface of the first application with the access page of the first link includes: The terminal device replaces a view control at the position of the first link on the interface of the first application with a first surfaceview control; and the terminal device assigns a first interface of the first surfaceview control to a second interface created when the second application obtains the access page of the first link.

Because the first interface of the first surfaceview control is assigned a value to the second interface created when the second application obtains the access page of the first link, the access page of the first link obtained when the second application accesses the first link may be displayed in the first surfaceview control. Therefore, the terminal device may obtain the access page of the first link, and display the access page of the first link on the interface of the first application.

Alternatively, in another implementation, that the terminal device displays the access page of the first link on the interface of the first application includes: The terminal device adds the access page of the first link on the interface of the first application.

Optionally, that the terminal device adds the access page of the first link to the interface of the first application includes: The terminal device adds a first surfaceview control to the interface of the first application; and the terminal device assigns a first interface of the first surfaceview control to a second interface created when the second application obtains the access page of the first link.

For example, the terminal device may add the first surfaceview control to a blank area of the interface of the first application. After the first surfaceview control is added, after the terminal device assigns the first interface of the first surfaceview control to the second interface created when the second application obtains the access page of the first link, the access page of the first link can also be displayed on the interface of the first application.

In some implementations, the method further includes: The terminal device receives a second operation, where the second operation is an operation of switching the access page of the first link for full-screen display; and displays, by the terminal device, the access page of the first link in full screen in response to the second operation.

Optionally, that the terminal device displays the access page of the first link in full screen includes: The terminal device creates a full screen interface, and assigns the full screen interface to a second interface created when the second application obtains the access page of the first link.

A manner of switching the access page of the first link for full-screen display is provided for the user. This can better meet an actual browsing requirement of the user and improve user experience. Optionally, the method further includes: The terminal device receives a third operation, where the third operation is an operation of canceling full-screen display of the access page of the first link; and the terminal device displays the access page of the first link on the interface of the first application in response to the third operation.

In this manner, when browsing the access page of the first link in full screen, the user may further perform the third operation to trigger the terminal device to switch the access page of the first link from full-screen display to embedded display.

In some implementations, the method further includes: When the access page of the first link is displayed on the interface of the first application, if the access page of the first link is moved to a screen boundary because of sliding up or sliding down of the interface of the first application, the terminal device displays the access page of the first link in floating mode.

Optionally, that the terminal device displays the access page of the first link in floating mode includes: The terminal device creates a floating interface, and assigns the floating interface to the second interface created when the second application obtains the access page of the first link.

In this manner, if the access page of the first link is moved to the screen boundary because of sliding up or sliding down of the interface of the first application, because the access page of the first link floats on the interface of the first application for display, the access page of the first link does not move out of the screen of the terminal device as the interface of the first application slides up or down.

Optionally, the method further includes: When the access page of the first link is displayed in floating mode, if the access page of the first link is far away from the screen boundary because of sliding up or sliding down of the interface of the first application, the terminal device displays the access page of the first link on the interface of the first application.

Optionally, the method further includes: When the access page of the first link is displayed in floating mode, the terminal device dynamically adjusts a size of the access page of the first link based on a position relationship between a first element on the interface of the first application and the access page of the first link, where the size of the access page of the first link is related to the size of the first element.

For example, the first application may be a chat application, and the first element may be a chat box. In this manner, the terminal device dynamically adjusts the size of the access page of the first link based on a position relationship between the chat box and the access page of the first link, so that the access page of the first link does not affect the chat box.

In some implementations, the method further includes: The terminal device receives a fourth operation, where the fourth operation is an operation of closing the access page of the first link; and the terminal device closes the access page of the first link in response to the fourth operation, and does not display the access page of the first link on the interface of the first application.

Optionally, the terminal device displays the access page of the first link on the interface of the first application by replacing the picture at the position of the first link on the interface of the first application with the access page of the first link, and after that the terminal device closes the access page of the first link, the method further includes: The terminal device re-displays the first link on the interface of the first application.

Optionally, that the interface of the first application includes a first link means that the interface of the first application includes a thumbnail corresponding to the first link and/or an open button of the first link.

In some implementations, the thumbnail corresponding to the first link includes a thumbnail of the second application or a default thumbnail.

In some implementations, the second application includes an application corresponding to the first link or a default application on the terminal device.

In some implementations, when the access page of the first link is displayed on the interface of the first application, an area occupied by the access page of the first link on the interface of the first application is greater than an area occupied by the first link on the interface of the first application. According to a second aspect, an embodiment of this application provides a display apparatus, and the apparatus may be applied to a terminal device. The apparatus includes: a display module, configured to display an interface of a first application, where the interface of the first application includes a first link; a receiving module, configured to receive a first operation, where the first operation is an operation of opening the first link; and a processing module, configured to obtain, in response to the first operation, an access page of the first link by using a second application, and display the access page of the first link on the interface of the first application by using the display module.

In an implementation, the processing module is specifically configured to replace a picture at a position of the first link on the interface of the first application with the access page of the first link, so as to display the access page of the first link on the interface of the first application.

Optionally, the processing module is specifically configured to replace a view control at the position of the first link on the interface of the first application with the first surfaceview control; and assign a first interface of the first surfaceview control to a second interface created when the second application obtains the access page of the first link, so as to replace the picture at the position of the first link on the interface of the first application with the access page of the first link.

Alternatively, in another implementation, the processing module is specifically configured to add the access page of the first link to the interface of the first application, so as to display the access page of the first link on the interface of the first application.

Optionally, the processing module is specifically configured to add the first surfaceview control to the interface of the first application, and assign the first interface of the first surfaceview control to the second interface created when the second application obtains the access page of the first link, so as to add the access page of the first link to the interface of the first application.

In some implementations, the receiving module is further configured to receive a second operation, where the second operation is an operation of switching the access page of the first link for full-screen display. The processing module is further configured to display, in response to the second operation, the access page of the first link in full screen by using the display module.

Optionally, the processing module is specifically configured to: create a full-screen interface, and assign the full-screen interface to a second interface created when the second application obtains the access page of the first link, so as to display the access page of the first link in full screen.

Optionally, the receiving module is further configured to receive a third operation, where the third operation is an operation of canceling full-screen display of the access page of the first link; and the processing module is further configured to display, in response to the third operation, the access page of the first link on the interface of the first application by using the display module.

In some implementations, when the access page of the first link is displayed on the interface of the first application, if the access page of the first link is moved to a screen boundary because of sliding up or sliding down of the interface of the first application, the processing module is further configured to display the access page of the first link in floating mode by using the display module. Optionally, the processing module is specifically configured to: create a floating interface, and assign the floating interface to the second interface created when the second application obtains the access page of the first link, so as to display the access page of the first link in floating mode.

Optionally, when the access page of the first link is displayed in floating mode, if the access page of the first link is far away from the screen boundary because of sliding up or sliding down of the interface of the first application, the processing module is further configured to display the access page of the first link on the interface of the first application by using the display module.

Optionally, when the access page of the first link is displayed in floating mode, the processing module is further configured to dynamically adjust a size of the access page of the first link based on a position relationship between a first element on the interface of the first application and the access page of the first link, where the size of the access page of the first link is related to a size of the first element.

In some implementations, the receiving module is further configured to receive a fourth operation, where the fourth operation is an operation of closing the access page of the first link; and the processing module is further configured to: close the access page of the first link in response to the fourth operation, and skip displaying the access page of the first link on the interface of the first application by using the display module.

Optionally, the processing module displays the access page of the first link on the interface of the first application by replacing the picture at the position of the first link on the interface of the first application with the access page of the first link; and the processing module is further configured to: after the access page of the first link is closed, re-display the first link on the interface of the first application by using the display module.

Optionally, that the interface of the first application includes a first link means that the interface of the first application includes a thumbnail corresponding to the first link and/or an open button of the first link.

In some implementations, the thumbnail corresponding to the first link includes a thumbnail of the second application or a default thumbnail.

In some implementations, the second application includes an application corresponding to the first link, or a default application on the apparatus.

In some implementations, when the access page of the first link is displayed on the interface of the first application, an area occupied by the access page of the first link on the interface of the first application is greater than an area occupied by the first link on the interface of the first application. According to a third aspect, an embodiment of this application provides an electronic device. The electronic device may be the terminal device in the first aspect. The electronic device includes: a processor, and a memory configured to store processor-executable instructions. When the processor is configured to execute the instructions, the electronic device is enabled to implement the method according to any one of the first aspect and the possible implementations of the first aspect.

According to a fourth aspect, an embodiment of this application provides a computer-readable storage medium, where the computer-readable storage medium stores computer program instructions. When the computer program instructions are executed by the electronic device, the electronic device is enabled to implement the method according to any one of the first aspect or the possible implementations of the first aspect.

According to a fifth aspect, an embodiment of this application provides a computer program product, including computer-readable code or a non-volatile computer-readable storage medium that carries computer-readable code. When the computer-readable code is run in an electronic device, a processor in the electronic device implements the method according to any one of the first aspect and the possible implementations of the first aspect.

For beneficial effects of the second aspect to the fifth aspect, refer to the first aspect. Details are not described herein again.

It should be understood that, descriptions of technical features, technical solutions, beneficial effect, or similar words in this application do not imply that all features and advantages can be implemented in any individual embodiment. On the contrary, it may be understood that, the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may be combined in any proper manner. A person skilled in the art may understand that an embodiment may be implemented without one or more specific technical features or technical solutions, or beneficial effects in a specific embodiment. In other embodiments, additional technical features and beneficial effect may be identified in a specific embodiment that does not reflect all embodiments.

### BRIEF DESCRIPTION OF DRAWINGS

FIG. 1 is a schematic diagram of an interface of a chat application;
FIG. 2 is another schematic diagram of an interface of a chat application;
FIG. 3 is a schematic diagram in which a terminal device displays an access page of a link 2 in full screen;
FIG. 4 is a schematic diagram in which a terminal device displays an access page of a link 2 in a form of a floating window;
FIG. 5 is another schematic diagram in which a terminal device displays an access page of a link 2 in a form of a floating window;
FIG. 6 is a schematic diagram of a structure of a terminal device according to an embodiment of this application;
FIG. 7 is a schematic architectural diagram of an Android system according to an embodiment of this application;
FIG. 8 is a schematic diagram of a relationship between an imageview control and Surface_A according to an embodiment of this application;
FIG. 9 is a schematic diagram of a relationship between a surfaceview control, Surface_A, and Surface_B according to an embodiment of this application;
FIG. 10 is a schematic diagram of an effect in which content on Surface_B is displayed on a surface of a surfaceview control on Surface_A according to an embodiment of this application;
FIG. 11 is a schematic diagram of a relationship between an imageview control, a surfaceview control, and Surface_A according to an embodiment of this application;
FIG. 12 is a schematic diagram of an interface of a chat application according to an embodiment of this application;
FIG. 13 is a schematic diagram of an effect of displaying a short video P embedded in an interface of a chat application according to an embodiment of this application;
FIG. 14 is a schematic diagram of an effect of full-screen display of a short video P according to an embodiment of this application;
FIG. 15 is a schematic diagram of sliding up an interface of a chat application when a short video P is embedded in an interface of a chat application for display according to an embodiment of this application;
FIG. 16 is a schematic diagram of sliding down an interface of a chat application when a short video P is embedded in an interface of a chat application for display according to an embodiment of this application;
FIG. 17 is a schematic diagram of a short video P floating on an interface of a chat application for display when an interface of a chat application slides up according to an embodiment of this application;
FIG. 18 is a schematic diagram of displaying a short video P floating on an interface of a chat application when the interface of the chat application slides down according to an embodiment of this application;
FIG. 19 is another schematic diagram of an interface of a chat application according to an embodiment of this application;
FIG. 20 is still another schematic diagram of an interface of a chat application according to an embodiment of this application;
FIG. 21 is still another schematic diagram of an interface of a chat application according to an embodiment of this application;
FIG. 22 is a schematic diagram of an interface of a mailbox according to an embodiment of this application;
FIG. 23 is a schematic diagram of an effect of displaying a short video P embedded in an interface of a mailbox according to an embodiment of this application;
FIG. 24 is a schematic diagram of an interface of a status bar of a mobile phone according to an embodiment of this application;
FIG. 25 is a schematic diagram of an effect of displaying specific content of a "Notification B" embedded in an interface of a status bar according to an embodiment of this application; and
FIG. 26 is a schematic diagram of a structure of a display apparatus according to an embodiment of this application.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in the following embodiments of this application, "at least one" and "one or more" mean one or more than two (including two). The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise stated.

The terms "first" and "second" mentioned below are merely intended for a purpose of description, and shall not be understood as an indication or implication of relative importance or implicit indication of the number of indicated technical features. Therefore, a feature limited to "first" and "second" may explicitly or implicitly include one or more of the features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

An application that has a social attribute (or has a function of sending and receiving information), for example, a chat application or a mailbox, may provide a function of sharing a link for a user. For example, in a process in which the user uses the chat application on a terminal device, the terminal device may receive a link shared by another user. The link may be displayed on an interface of the chat application as a part of chat content. The user may tap the link to trigger the terminal device to display an access page (or referred to as a window corresponding to the link, or a preview window, or a display window) of the link. The access page of the link may be a page in another application, and the page may include data of types such as a text, a picture, an audio, a video, and a web page.

For example, in a possible implementation scenario, a user 1 holds a terminal device 1, a user 2 holds a terminal device 2, and a chat application and a short video application are installed on both the terminal device 1 and the terminal device 2. When the user 2 views a short video P in the short video application on the terminal device 2, the user 2 may send a link of the short video P to the terminal device 1 by using the chat application. The link of the short video P may be displayed on an interface of the chat application as a part of the chat content. The user 1 may tap the link of the short video P on the interface of the chat application, to trigger the terminal device 1 to display an access page of the link of the short video P. The access page includes the short video P. The user 1 can view the short video P on the access page.

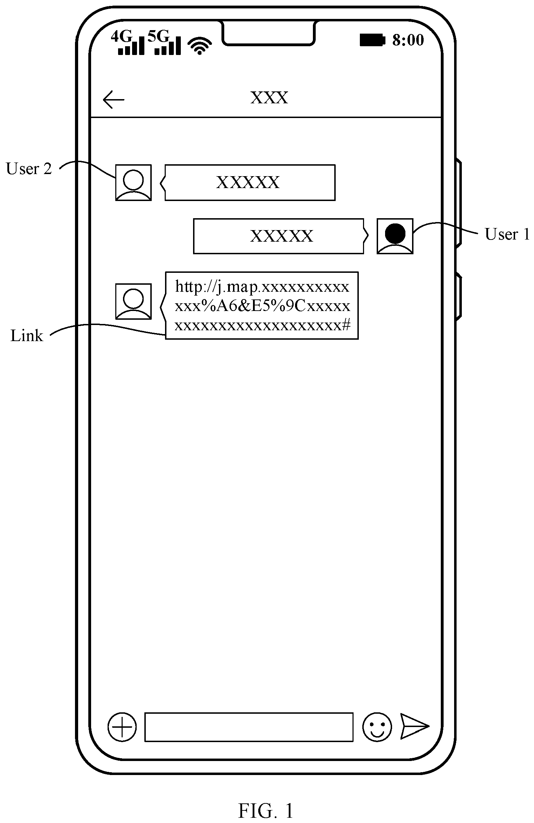

In the chat application, a presentation form of a link is a uniform resource identifier (uniform resource identifier, URI) in a text form. For example, FIG. 1 is a schematic diagram of an interface of the chat application. As shown in FIG. 1, in a process in which the user 1 and the user 2 perform a chat by using the chat application, a link shared by the user 2 with the user 1 may be a URI in a text form: "http://j.map.xxxxxxxxxxxxx%A6&E5%9Cxxxxxxxxxxxxxxxxxxxxxxx#". It may be understood that the URI shown in FIG. 1 is merely used as an example.

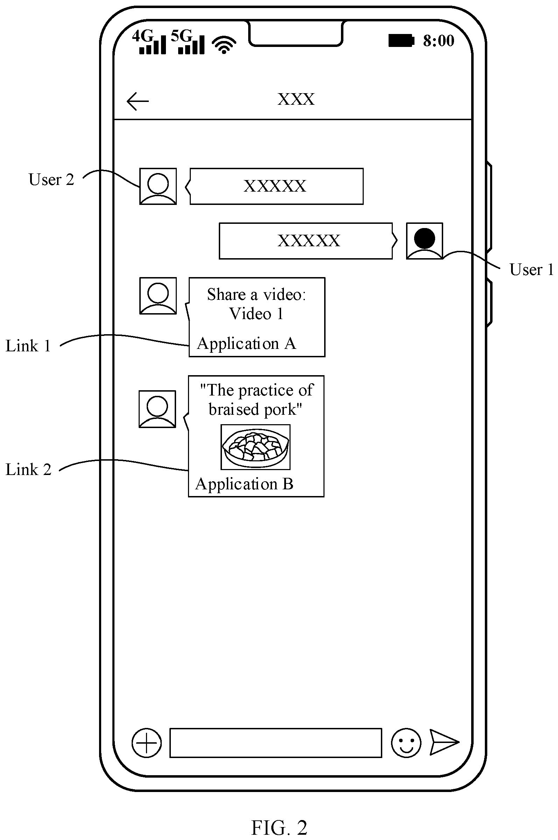

Another presentation form of a link is a form of a card. For example, FIG. 2 is another schematic diagram of an interface of the chat application. As shown in FIG. 2, in a process in which the user 1 and the user 2 perform a chat by using the chat application, a link shared by the user 2 with the user 1 may include a link 1 and a link 2, and the link 1 and the link 2 may be static cards. A card corresponding to the link 1 may include identifiers such as "Application A" and "Video 1". The identifiers such as "Application A" and "Video 1" may indicate that the link 1 is a link of the video 1 in the application A. A card corresponding to the link 2 may include identifiers such as "Application B" and "The practice of braised pork". The identifiers such as "Application B" and "The practice of braised pork" may indicate that the link 2 is a link to an article titled "The practice of braised pork" in the application B. Compared with the presentation form in which a URI in a text form is used as a link, the presentation form in which a static card is used as a link in FIG. 2 can display more detailed information related to the link.

For the link shown in each of FIG. 1 and FIG. 2, when the user (the user 1) taps the link, if an application corresponding to the link is installed on the terminal device (for example, an application corresponding to the link 1 is the application A, and an application corresponding to the link 2 is the application B), the terminal device may jump to, in response to an operation of tapping the link by the user, the application corresponding to the link to display an access page of the link. If the application corresponding to the link is not installed on the terminal device, the terminal device may jump to, in response to an operation of tapping the link by the user, a default application (for example, a browser) to display the access page of the link.

Currently, when the terminal device jumps to the application corresponding to the link or the default application to display the access page of the link, the access page of the link is usually displayed in full screen or displayed in a form of a floating window. Consequently, the original interface of the chat application is blocked.

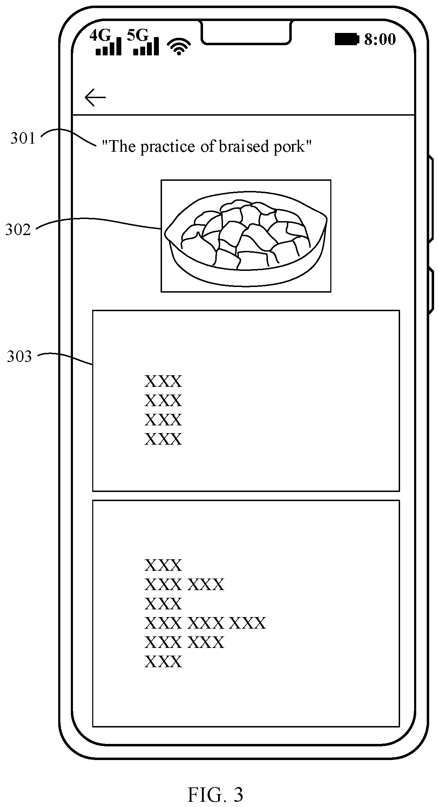

For example, the user taps the link 2 shown in FIG. 2. FIG. 3 is a schematic diagram in which the terminal device displays an access page of the link 2 in full screen. As shown in FIG. 3, when the user taps the link 2, the terminal device may jump to, in response to an operation of tapping the link 2 by the user, the application corresponding to the link 2 or the default application to display the access page of the link 2 in full screen. The access page of the link 2 may include the title "The practice of braised pork" 301, a picture 302, a text 303, and the like of the article corresponding to the link 2. Because the access page of the link 2 is displayed in full screen, the original interface of the chat application shown in FIG. 2 is completely blocked, and the user cannot perform another operation on the original interface of the chat application, for example, entering a text into a chat box, while browsing the access page of the link 2.

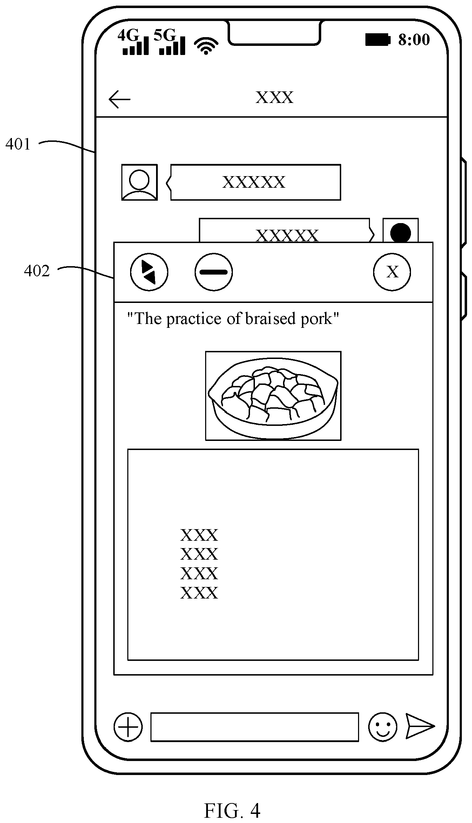

Similarly, for example, the user taps the link 2 shown in FIG. 2. FIG. 4 is a schematic diagram in which the terminal device displays an access page of the link 2 in a form of a floating window. As shown in FIG. 4, when the user taps the link 2, the terminal device may jump to, in response to the operation of tapping the link 2 by the user, the application corresponding to the link 2 or the default application to display the access page 402 of the link 2 in the form of the floating window. To be specific, the access page 402 of the link 2 is displayed above the original interface 401 of the chat application in the form of the floating window. Because the access page 402 of the link 2 is displayed above the original interface 401 of the chat application in the form of the floating window, the original interface 401 of the chat application can be prevented from being completely blocked.

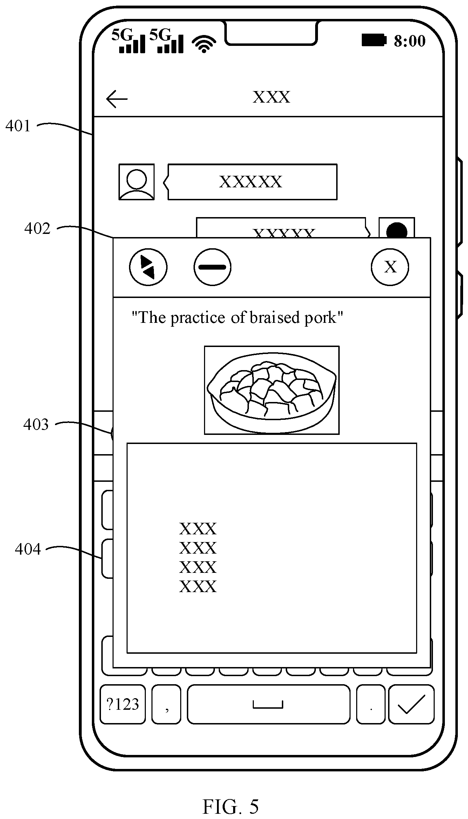

The user may perform some other operations on the original interface 401 of the chat application while browsing the access page 402 of the link 2. However, because the access page 402 of the link 2 still blocks a part of the original interface 401 of the chat application, the user is still affected to some extent when browsing the access page 402 of the link 2 and performing other operations on the original interface 401 of the chat application. For example, FIG. 5 is another schematic diagram in which the terminal device displays an access page of the link 2 in a form of a floating window. As shown in FIG. 5, when the user opens an input keyboard 404 to enter a text into a chat box 403, the access page 402 of the link 2 may block the chat box 403, or even block the input keyboard 404.

In this background, an embodiment of this application provides a display method. The display method may be applied to a terminal device. A first application is installed in the terminal device. In the method, for a link included in an interface of the first application, after the terminal device detects an operation of opening the link, the terminal device may obtain an access page of the link by using a second application, and display the access page of the first link on the interface of the first application, so that the interface of the first application is not blocked when the access page of the link is displayed.

For example, in some implementations, the terminal device may embed the access page of the link in the interface of the first application for display, to display the access page of the first link on the interface of the first application.

The first application is different from the second application, and the second application may be an application corresponding to the link, or a default application (for example, a browser) on the terminal device. That the second application is an application corresponding to the link means that the access page of the link is a page in the second application.

Optionally, the application corresponding to the link may be an application on the terminal device on which the first application is located, or may be an application on another terminal device. For example, if the terminal device on which the first application is located is a first terminal, the application corresponding to the link may be an application on the first terminal, or may be an application on a second terminal. The first terminal is different from the second terminal. A position relationship of the application corresponding to the link relative to the first application is not limited in this application.

In some embodiments, the first application may be an application that has a social attribute or a function of sending and receiving information, for example, a chat application (for example, MeeTime), Mailbox (or referred to as Email), or Messages. The application corresponding to the link may be an application that can provide multimedia resources such as a text, a picture, an audio, a video, and a web page for a user. For example, the application corresponding to the link may be a short video application, a live broadcast application, a browser, a music application, or the like. This is not limited herein.

Optionally, in this embodiment of this application, the terminal device may be a mobile phone, or may be a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the terminal device is not limited in embodiments of this application.

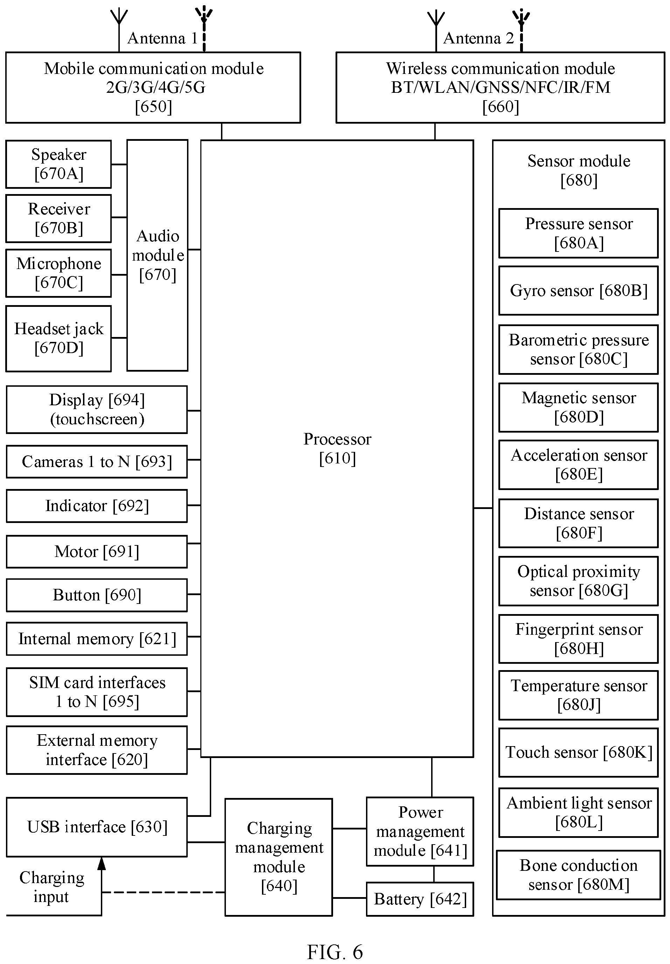

For example, the terminal device is a mobile phone. FIG. 6 is a schematic diagram of a structure of a terminal device according to an embodiment of this application. As shown in FIG. 6, the mobile phone may include a processor 610, an external memory interface 620, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a speaker 670A, a receiver 670B, a microphone 670C, a headset jack 670D, a sensor module 680, a button 690, a motor 691, an indicator 692, a camera 693, a display 694, a subscriber identification module (subscriber identification module, SIM) card interface 695, and the like.

The processor 610 may include one or more processing units. For example, the processor 610 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

A memory may be further disposed in the processor 610, and is configured to store instructions and data. In some embodiments, the memory in the processor 610 is a cache. The memory may store instructions or data just used or cyclically used by the processor 610. If the processor 610 needs to use the instructions or the data again, the processor may directly invoke the instructions or the data from the memory. This avoids repeated access, reduces waiting time of the processor 610, and improves system efficiency.

In some embodiments, the processor 610 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The external memory interface 620 may be configured to be connected to an external memory card, for example, a micro SD card, to extend a storage capability of the mobile phone. The external memory card communicates with the processor 610 through the external memory interface 620, to implement a data storage function. For example, files such as music and videos are stored in the external storage card.

The internal memory 621 may be configured to store computer-executable program code. The executable program code includes instructions. The processor 610 runs the instructions stored in the internal memory 621, to perform various function applications of the mobile phone and data processing. For example, the internal memory 621 may store instructions corresponding to the display method in this embodiment of this application, and the processor 610 may execute the instructions to implement the display method. For example, the access page of the first link may be obtained by using the second application, and the access page of the first link is embedded in the interface of the first application for display.

The internal memory 621 may further include a program storage area and a data storage area. The program storage area may store an operating system, an application (for example, the first application or the second application described in this embodiment of this application) required by at least one function, and the like. The data storage area may store data (for example, chat information, the first link, and a thumbnail) created in a process of using the mobile phone. In addition, the internal memory 521 may include a high-speed random access memory, or may include a non-volatile memory, for example, at least one magnetic disk storage device, a flash memory, or a universal flash storage (universal flash storage, UFS).

The charging management module 640 is configured to receive a charging input from a charger. When charging the battery 642, the charging management module 640 may further supply power to the mobile phone by using the power management module 641. The power management module 641 is configured to connect the battery 642, the charging management module 640, and the processor 610. The power management module 641 may also receive an input of the battery 642 to supply power to the mobile phone.

A wireless communication function of the mobile phone may be implemented by using the antenna 1, the antenna 2, the mobile communication module 650, the wireless communication module 660, the modem processor, the baseband processor, and the like. The antenna 1 and the antenna 2 are configured to transmit and receive an electromagnetic wave signal. Each antenna in the mobile phone may be configured to cover one or more communication frequency bands Different antennas may be further multiplexed, to improve antenna utilization. For example, the antenna 1 may be multiplexed as a diversity antenna of a wireless local area network. In some other embodiments, an antenna may be used in combination with a tuning switch. For example, the mobile phone may receive, by using the wireless communication function, a link sent by another device (for example, a second terminal or a server).

The mobile phone may implement an audio function, for example, music playing or recording, by using an audio module 670, a speaker 670A, a receiver 670B, a microphone 670C, a headset jack 670D, an application processor, or the like.

The sensor module 680 may include a pressure sensor 680A, a gyro sensor 680B, a barometric pressure sensor 680C, a magnetic sensor 680D, an acceleration sensor 680E, a distance sensor 680F, an optical proximity sensor 680G, a fingerprint sensor 680H, a temperature sensor 680J, a touch sensor 680K, an ambient optical sensor 680L, a bone conduction sensor 680M, and the like. The display 694 is configured to display an image, a video, and the like. The display 694 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light emitting diodes, QLED), or the like. In some embodiments, the mobile phone may include one or N displays 694, where N is a positive integer greater than 1. For example, the display 694 may be configured to display an application interface. For example, the mobile phone may display the interface of the first application by using the display 694 or display the access page of the first link in full screen. The interface of the first application may include the first link, or the access page of the first link embedded in the interface of the first application, or the access page of the first link floating on the interface of the first application.

The mobile phone implements a display function by using the GPU, the display 694, the application processor, and the like. The GPU is a microprocessor for image processing, and is connected to the display 694 and the application processor. The GPU is configured to: perform mathematical and geometric computation, and render an image. The processor 610 may include one or more GPUs, and the one or more GPUs execute program instructions to generate or change display information.

It may be understood that the structure shown in FIG. 6 does not constitute a specific limitation on the mobile phone. In some embodiments, the mobile phone may alternatively include more or fewer components than those shown in FIG. 6, or combine some components, or split some components, or have different component arrangements, or the like. Alternatively, some components shown in FIG. 6 may be implemented by using hardware, software, or a combination of software and hardware.

In addition, the terminal device is a mobile terminal, for example, another tablet computer, a wearable device, a vehicle-mounted device, an AR/VR device, a notebook computer, a UMPC, a netbook, or a PDA. For a specific structure of the another terminal device, refer to FIG. 6. For example, components may be added to or deleted from the another terminal device based on the structure shown in FIG. 6. Details are not described herein again.

Optionally, an operating system of the terminal device may be a Harmony^{™} (harmony) system, an Android^{™} (android) system, an ios^{™} system, a windows^{™} system, a mac^{™} system, a linux^{™} system, or the like. More specifically, the operating system of the terminal device may alternatively be a Xiaomi^{™} system or an EMUI^{™} system, an Android Wear^{™} system, a Lite OS^{™} system, a Tizen^{™} system, a watch os^{™} system, or the like. The operating system of the terminal device is not limited herein.

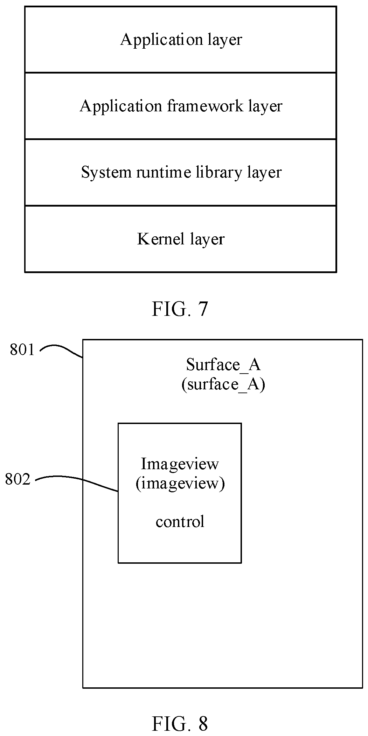

For example, an operating system of the terminal device is an Android system. FIG. 7 is a schematic architectural diagram of an Android system according to an embodiment of this application. As shown in FIG. 7, an Android system generally includes an application layer (applications), an application framework layer (application framework), a system runtime library layer (libraries), and a kernel layer.

The first application and the second application in embodiments of this application may be deployed at the application layer. The application layer may further include another system application, for example, a calendar, a map, a browser, or contact management, and a third-party application designed and written by a developer by using a Java language.

The application framework layer may include a package manager service (package manager service, PMS). The PMS scans a specified directory in the operating system, finds files whose names end with APK, parses these files, obtains all information about the application, and installs the application. The APK information parsed from the package management service can be used by other services.

The following uses an example in which the operating system of the terminal device is an Android system, and the interface of the first application includes the first link. In the display method provided in this embodiment of this application, after the terminal device detects the operation of opening the first link, the terminal device obtains the access page of the first link by using the second application. A specific principle in which the access page of the first link is embedded in the interface of the first application for display is described.

For example, that the terminal device detects an operation of opening the first link may be: The terminal device detects an operation of tapping the first link by a user on the interface of the first application, or an operation of tapping a start button of the first link. For example, the terminal device may display the interface of the first application, and the interface of the first application includes the first link. The terminal device may receive the first operation, and the first operation is an operation of opening the first link.

After the terminal device detects the operation of opening the first link, the terminal device may start the second application (the application corresponding to the first link or the default application) according to a startActivity (startActivity) method. When the application corresponding to the first link is installed on the terminal device, the terminal device may start the application corresponding to the first link by using the startActivity method. When the application corresponding to the first link is not installed on the terminal device, the terminal device may start the default application by using the startActivity method.

For example, the startActivity method may be startActivity (Intent intent). The startActivity (Intent intent) includes an intent (intent) parameter, and the intent parameter may include information about a second application that needs to be started, for example, a URI and a package name (for example, a package name of the second application). A package manager service (package manager service, PMS) in the operating system of the terminal device may invoke the second application corresponding to the URI included in the intent parameter, and transmit the URI included in the intent parameter to the second application. The second application may access the URI, and display specific content corresponding to the first link, for example, a short video. The specific content that corresponds to the first link and that is displayed in the URI accessed by the second application is the access page of the first link.

In other words, the terminal device may obtain, in response to the first operation, the access page of the first link by using the second application, and display the access page of the first link on the interface of the first application.

In an implementation, that the terminal device displays the access page of the first link on the interface of the first application includes: The terminal device replaces a picture at a position of the first link on the interface of the first application with the access page of the first link.

Optionally, that the terminal device replaces a picture at a position of the first link on the interface of the first application with the access page of the first link includes: The terminal device replaces a view control at the position of the first link on the interface of the first application with a first surfaceview control; and the terminal device assigns a first interface of the first surfaceview control to a second interface created when the second application obtains the access page of the first link. For example, when the second application accesses the URI to display the specific content corresponding to the first link, the terminal device may replace a view (view) control at a position of the first link on the interface of the first application with a surface/canvas view (surfaceview) control, assign a surface of the surfaceview control to a surface on which the second application displays the specific content corresponding to the first link. The surfaceview control is the first surfaceview control, the surface of the surfaceview control is the first interface, and the surface on which the second application displays the specific content corresponding to the first link is a second interface created by the second application when the second application obtains the access page of the first link. Because the surface of the surfaceview control is assigned to the surface on which the second application displays the specific content corresponding to the first link, the specific content that corresponds to the first link and that is displayed when the second application accesses the URI may be displayed in the surfaceview control. Therefore, the terminal device may obtain the access page of the first link, and embed the access page of the first link in the interface of the first application for display.

The surface is used to manage the interface. Surfaces are independent of each other and are finally synthesized by a surfaceflinger (surfaceflinger) and rendered to the screen. During display, a surface created later is generally located on an upper layer of a surface created earlier. Generally, a default display mode of a surface is full-screen display. However, a display size of the surface may be changed to adjust a size of an area occupied by the surface on the interface. For example, a surface 1 is created first and then a surface 2 is created. When the surfaceflinger performs composition on the surface 1 and the surface 2, and renders the surface 1 and the surface 2 to the screen, the surface 2 is on the upper layer of the surface 1. If a size of the surface 2 is not adjusted, the surface 2 is displayed in full screen by default and the surface 1 is blocked. If the size of the surface 2 is adjusted, for example, a layout size of the surface 2 is reduced, the surface 2 may implement floating display on the upper layer of the surface 1, that is, the surface 2 may exist in a form of a floating window. For another example, for surfaces of some view controls (such as the surfaceview control) on the interface, when such surfaces are displayed on the interface, a size of the surface is related to, for example, may be the same as, a layout size of the view controls. The size of the surface of the view control can be adjusted by adjusting the layout size of the view control.

It may be understood that the first link is displayed on the interface of the first application based on a view control, and a view control used to display the first link on the interface of the first application is related to a presentation form of the first link. For example, when the first link is the foregoing URI in a text form, the view control used to display the first link on the interface of the first application may be a textview (textview) control. Alternatively, when the first link is the URI in the form of the foregoing card, the view control used to display the first link on the interface of the first application may include a textview control, an imageview (image view) control, or the like. For example, the view control used to display the first link on the interface of the first application is the imageview control. That the terminal device replaces the view control at the position of the first link on the interface of the first application with the surfaceview control may mean that the terminal device replaces the imageview control with the surfaceview control.

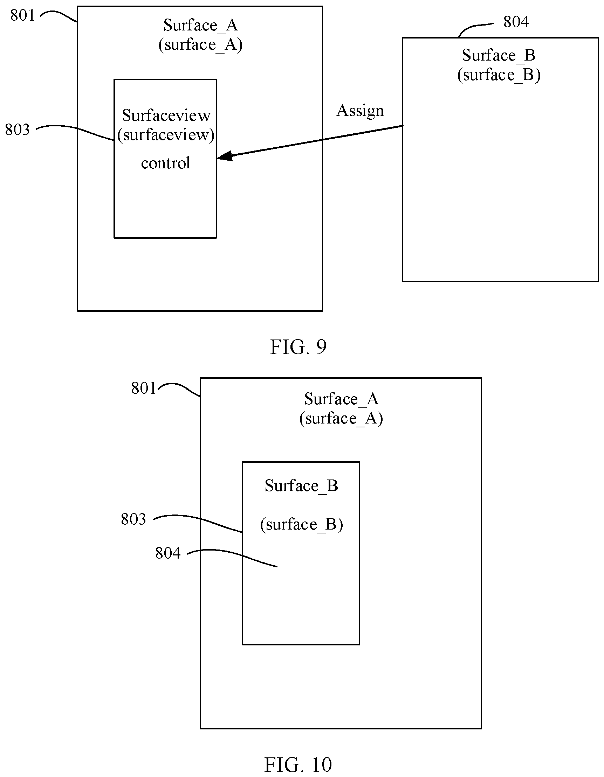

For example, the interface of the first application is Surface_A, a view control used to display the first link on Surface_Ais the imageview control, and the access page of the first link is Surface_B. FIG. 8 is a schematic diagram of a relationship between an imageview control and Surface_A according to an embodiment of this application. As shown in FIG. 8, Surface_A 801 may include an imageview control 802, and the imageview control 802 is configured to display the first link. FIG. 9 is a schematic diagram of a relationship between a surfaceview control, Surface_A, and Surface_B according to an embodiment of this application. As shown in FIG. 9, for Surface_A 801 shown in FIG. 8, the terminal device may replace the imageview control 802 (that is, the view control at the position of the first link) on Surface _A 801 with a surfaceview control 803. The surfaceview control 803 has a surface layer. Then, when creating Surface B 804, the terminal device may assign the surface of the surfaceview control 803 on Surface_A 801 to Surface_B 804.

In this case, content on Surface_B 804 is drawn on the surface of the surfaceview control 803 on Surface_A 801 for display.

For example, FIG. 10 is a schematic diagram of an effect in which content on Surface_B is displayed on a surface of a surfaceview control on Surface_A according to an embodiment of this application. As shown in FIG. 10, the content on Surface_B 804 is drawn on the surface of the surfaceview control 803 on Surface_A 801 for display, that is, Surface_B 804 is embedded in Surface_A 801 for display.

It should be noted that, as described in the foregoing embodiment, for surfaces of some view controls on the interface, when such surfaces are displayed on the interface, a size of the surfaces may be the same as a layout size of the view controls. Therefore, after the surface of the surfaceview control 803 on Surface_A 801 is assigned to Surface_B 804, when the content on Surface_B 804 is drawn to the surface of the surfaceview control 803 on Surface_A 801 for display, an area occupied by the content on Surface_B 804 on Surface_A is an area occupied by the surface of the surfaceview control 803. For example, when the content on Surface_B 804 is displayed on the surface of the surfaceview control 803, a size of the content is adaptively adjusted to the layout size of the surface of the surfaceview control 803.

Optionally, in the foregoing embodiment, the terminal device replaces the view control at the position of the first link on the interface of the first application with the surfaceview control, so as to embed the access page of the first link in the interface of the first application for display. In some other embodiments, when the second application accesses the URI to display the specific content corresponding to the first link, the terminal device may also add a surfaceview control to the interface of the first application, and assign a surface of the surfaceview control to the surface on which the second application displays the specific content corresponding to the first link. In this case, the specific content that corresponds to the first link and that is displayed in the URI accessed by the second application may also be displayed in the surfaceview control, so as to embed the access page of the first link in the interface of the first application for display.

In other words, in another implementation, that the terminal device displays the access page of the first link on the interface of the first application includes: The terminal device adds the access page of the first link on the interface of the first application. That the terminal device adds the access page of the first link to the interface of the first application includes: The terminal device adds a first surfaceview control to the interface of the first application; and the terminal device assigns a first interface of the first surfaceview control to a second interface created when the second application obtains the access page of the first link.

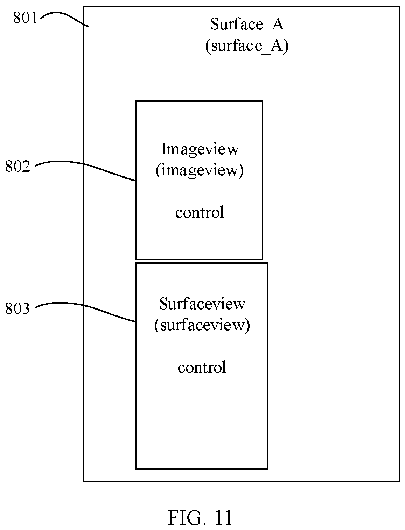

For example, the surfaceview control added by the terminal device to the interface of the first application may be below the view control at the position of the first link. For example, the interface of the first application is Surface_A, and the view control used to display the first link on Surface_A is the imageview control. FIG. 11 is a schematic diagram of a relationship between the imageview control, the surfaceview control, and Surface_A according to an embodiment of this application. As shown in FIG. 11, the terminal device may also add a surfaceview control 803 to Surface_A 801, and the surfaceview control 803 may be below the imageview control 802, for example, may be in a blank area below the imageview control 802.

Optionally, the surfaceview control added by the terminal device to the interface of the first application may alternatively be in another blank area of the interface of the first application. A position of the surfaceview control is not limited herein. The position of the surfaceview control may be related to the position of the first link on the interface of the first application.

It may be understood that in the foregoing example, Surface_A and Surface_B are essentially two independent surfaces. Therefore, both Surface_A and Surface_B can occupy a focus. For example, when a user performs a tap operation on Surface_A, Surface A occupies a focus. When the user performs a tap operation on Surface_B, Surface_B occupies a focus. Optionally, in this embodiment of this application, when Surface_B is embedded in Surface_A for display, processing logic of key (key) events may include: when the key events are generated, all back (back) events in the key events are processed by Surface_A. Other key events except the back event in the key events are dispatched by the window management service of the operating system. The key events are preferably dispatched to a top-level window that occupies the focus. The top-level window that occupies the focus may be Surface_A or Surface_B. Logic for Surface A to process the back events in the key events may be as follows:
(1) When Surface_B is embedded in Surface _A and is running (for example, when a short video P is being played), the logic for Surface_A to process the back event is to stop running Surface_B.
(2) When Surface_B is embedded in Surface_A and is not running (for example, when the short video P is paused), the logic for Surface _A to process the back event is to return to the previous page.

The key event may be that the user taps a button on the interface or performs an operation, for example, sliding or touching and holding on the interface, the user taps a system return key, or the like. The back event in the key event may mean that the user taps the system return key.

It should be noted that, although the foregoing uses an example in which the operating system of the terminal device is an Android system to describe a specific principle in which the terminal device obtains the access page of the first link by using the second application and embeds the access page of the first link in the interface of the first application for display, it should be understood that: When the operating system of the terminal device is another system other than the Android system, a specific principle in which the terminal device obtains the access page of the first link by using the second application, and embeds the access page of the first link in the interface of the first application for display is similar to the foregoing description. A difference lies only in that in the another operating system, a method used when the terminal device starts the second application, a view control used to display specific content on the interface, and the like may be different. Details are not described herein again.

The following uses an example in which the first application is a chat application and the second application is a short video application: an application A. With reference to a scenario in which a user receives a link of a short video P in the application A and taps the link to view the short video P in a process of performing a chat by using the chat application, the display method provided in this embodiment of this application is described by using an example. It may be understood that the link of the short video P is the foregoing first link.

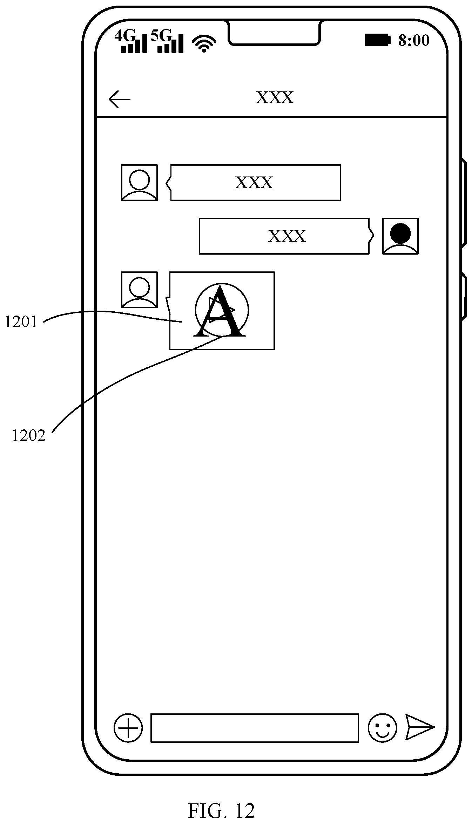

In a process in which the user chats with another user by using the chat application installed on the terminal device, when the terminal device receives a link of the short video P shared by the another user, the terminal device may display the link of the short video P on an interface of the chat application. For example, FIG. 12 is a schematic diagram of an interface of a chat application according to an embodiment of this application. As shown in FIG. 12, in some embodiments of this application, a manner in which the terminal device displays the link of the short video P on the interface of the chat application may include the following steps. The terminal device displays, on the interface of the chat application, a thumbnail 1201 corresponding to the link of the short video P and an open button 1202 of the link of the short video P. The open button 1202 may also be referred to as a start button, a play button, a browse button, or the like. This is not limited herein. In some embodiments, the thumbnail 1201 corresponding to the link of the short video P may be a thumbnail of an application A that can open the link of the short video P, or a default thumbnail, or a thumbnail of a default browser (in FIG. 12, an example in which the thumbnail 1201 corresponding to the link of the short video P is a thumbnail of the application A is used). For example, when the application A is installed on the terminal device, the terminal device may display the thumbnail of the application A on an interface of the chat application. When the application A is not installed on the terminal device, the terminal device may display the default thumbnail or the thumbnail of the default browser on the interface of the chat application. The thumbnail of the application A, the default thumbnail, the thumbnail of the default browser, and the like may be preset in the terminal device. For example, the terminal device may store a thumbnail file, and the thumbnail file may include thumbnails of one or more applications. When the terminal device needs to display a thumbnail corresponding to a link, the thumbnail of the application of the link may be found in the thumbnail file for display. The following uses an example in which the application A is installed on the terminal device for description.

In some other embodiments, the thumbnail 1201 corresponding to the link of the short video P may alternatively be replaced with a cover of the short video P, a first frame of the short video P, a frame of the short video P, or the like. This is not limited in this application.

For example, after receiving the link of the short video P, the terminal device may parse, based on the URI included in the link of the short video P, a scheme field, a host field, and the like of the URI, and find, based on an application package information configuration file of the installed application, the application that matches fields such as the scheme field and the host field that are parsed from the URI. The application that matches the fields such as the scheme field and the host field that are parsed out from the URI is an application that can open the link of the short video P, for example, the application A. Then, the terminal device may display the thumbnail of the application A and the open button 1202 of the link of the short video P. The application package information configuration file is also referred to as an application manifest (manifest) configuration file, and the configuration file includes information about an application installation package. For example, in an Android system, the application package information configuration file may be an AndroidManifest configuration file.

In this embodiment of this application, the terminal device may display, on the interface of the chat application by using the imageview control, the thumbnail 1201 corresponding to the link of the short video P. An operation of tapping the open button 1202 shown in FIG. 12 by the user is the operation of opening the first link. When the user taps the open button 1202 shown in FIG. 12, the terminal device may replace the imageview control on the interface of the chat application with the surfaceview control in response to an operation of detecting that the user taps the open button 1202, or add a surfaceview control to the interface of the chat application. In this example, the imageview control on the interface of the chat application is replaced with the surfaceview control. The surfaceview control has a surface layer. In addition, the terminal device may start the application A according to a startActivity method in response to the operation of detecting that the user taps the open button 1202, and the application A may access the URI included in the link of the short video P, to display the short video P. The specific principle is the same as that described in the foregoing embodiment. Details are not described again.

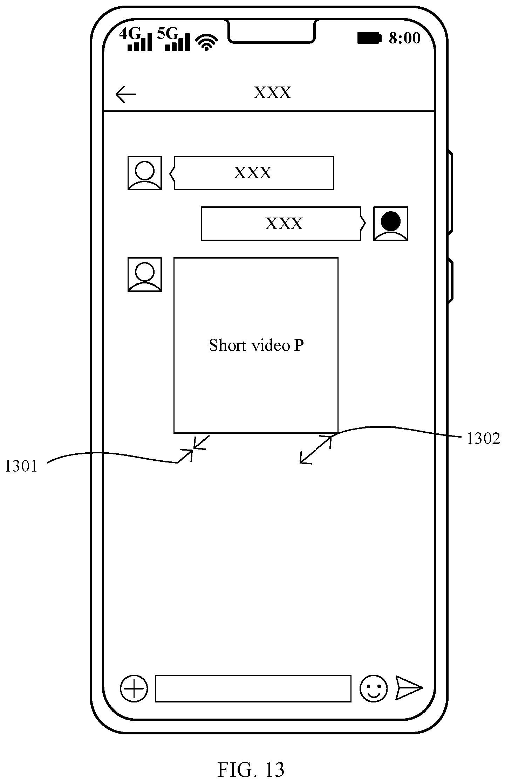

When creating the surface on which the application A displays the short video P, the terminal device may assign a surface of the surfaceview control on the interface of the chat application to the surface on which the application A displays the short video P. In this case, the short video P is drawn on the surface of the surfaceview control on the interface of the chat application for display. That is, the short video P may be embedded in the interface of the chat application for display. For example, FIG. 13 is a schematic diagram of an effect of displaying a short video P embedded in an interface of a chat application according to an embodiment of this application. As shown in FIG. 13, when the short video P is drawn on the surface of the surfaceview control on the interface of the chat application for display, the short video P may be embedded in the interface of the chat application. In this case, the user may continue to chat on the interface of the chat application while browsing the short video P, and the interface of the chat application is not blocked when the short video P is displayed.

In some embodiments, when the access page of the first link is embedded in the interface of the first application for display, the interface of the first application may further include a close button and a full-screen button. The close button may also be referred to as a stop button, and the full-screen button may also be referred to as a maximization button, a magnification button, or the like. When the user taps the close button, the terminal device may close the access page of the first link in response to an operation of tapping the close button by the user, and re-display the first link. For example, the terminal device may replace, in response to an operation of tapping the close button by the user, the surfaceview control with a view control at an original position of the first link, and re-display the first link based on the view control. The terminal device may further close the second application. That is, when the user taps the close button, the terminal device may close the embedded display effect of the access page of the first link, and display the first link again. When the user taps the full-screen button, the terminal device may display the access page of the first link in full screen in response to the operation of tapping the full-screen button by the user, for example, the terminal device may create a full-screen surface (that is, a full-screen interface) in response to the operation of tapping the full-screen button by the user, and assign the full-screen surface to a surface on which the second application displays the access page of the first link. In this case, the access page of the first link covers the interface of the first application, to implement full-screen display.

The scenarios shown in FIG. 12 and FIG. 13 are used as examples. Continue to refer to FIG. 13. When the short video P is embedded in the interface of the chat application for display, the interface of the chat application may further include a close button 1301 and a full-screen button 1302. When the user taps the close button 1301, the terminal device may replace, in response to an operation of tapping the close button 1301 by the user, the surfaceview control on the interface of the chat application with the imageview control that originally displays the link of the short video P, and re-display the link of the short video P based on the imageview control, for example, display the thumbnail 1201 corresponding to the link of the short video P and the open button 1202 of the link of the short video P. It may be understood that, when the terminal device re-displays the link of the short video P based on the imageview control, the interface of the chat application is restored to the interface shown in FIG. 12.

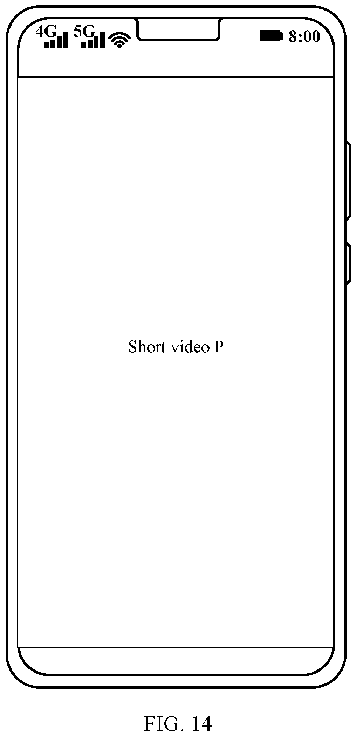

When the user taps the full-screen button 1302, the terminal device may create a full-screen surface in response to an operation of the user tapping the full-screen button 1302, and assign the full-screen surface to the surface on which the application A displays the short video P. In this case, the terminal device displays the short video P in full screen, and a display interface of the short video P covers an interface of the chat application. For example, FIG. 14 is a schematic diagram of an effect of full-screen display of a short video P according to an embodiment of this application. As shown in FIG. 14, when the short video P is displayed in full screen, the display interface of the short video P covers the interface of the chat application.

Optionally, when the short video P is displayed in full screen, the display interface of the short video P may include a minimization button (not shown in the figure). When the user taps the minimization button, the terminal device may reassign, in response to an operation of tapping the minimization button by the user, the surface of the surfaceview control on the interface of the chat application to the surface on which the application A displays the short video P, so that the display effect of the short video is switched from full-screen display to the interface embedded in the chat application for display. Alternatively, when the short video P is displayed in full screen, the display interface of the short video P may further include a close button (which is not shown in the figure, and may be the same as the close button 1301 on the interface of the chat application). When the user taps the close button, the terminal device may close the full-screen surface in response to an operation of tapping the close button by the user, replace the surfaceview control on the interface of the chat application with the imageview control that originally displays the link of the short video P, and re-display the link of the short video P based on the imageview control, for example, display the thumbnail 1201 corresponding to the link of the short video P and the open button 1202 of the link of the short video P.

The foregoing operation that the user taps the close button on the interface of the first application and the operation that the user taps the close button on the full-screen display interface of the short video P (the full-screen display interface of the access page of the first link) may be referred to as an operation of closing the access page of the first link. In this application, the foregoing operation of closing the access page of the first link may also be referred to as a fourth operation. After receiving the fourth operation, the terminal device may close the access page of the first link in response to the fourth operation, and may not display the access page of the first link on the interface of the first application.

The operation that the user taps the full-screen button on the interface of the first application may be referred to as an operation of switching the access page of the first link from embedded display to full-screen display, or an operation of switching the access page of the first link for full-screen display. In this application, the foregoing operation of switching the access page of the first link for full-screen display may also be referred to as a second operation. After receiving the second operation, the terminal device may display the access page of the first link in full screen in response to the second operation.

The operation that the user taps the minimization button on the full-screen display interface of the short video P (the full-screen display interface of the access page of the first link) may be referred to as an operation of switching the access page of the first link from full-screen display to embedded display, or an operation of canceling full-screen display of the access page of the first link. In this application, the foregoing operation of canceling full-screen display of the access page of the first link may also be referred to as a third operation. After receiving the third operation, the terminal device may display the access page of the first link on the interface of the first application in response to the second operation. That is, the access page of the first link may be switched from full-screen display to embedded display.

In some embodiments, functions such as closing the access page of the first link, switching the access page of the first link from embedded display to full-screen display, and switching the access page of the first link from full-screen display to embedded display may also be implemented based on other operation manners. For example, the user may tap, double-tap, or touch and hold an area on the screen, or touch another functional key, or perform some sliding operations on the screen, to trigger the terminal device to implement the foregoing functions. It should be noted that the foregoing embodiment is merely an example for description, and a specific operation manner in which the user triggers the terminal device to implement the foregoing function is not limited in this application.

Optionally, in this embodiment of this application, when the terminal device obtains the access page of the first link by using the second application, and embeds the access page of the first link in the interface of the first application for display, the terminal device may zoom in on the access page of the first link in an animation. For example, the scenario of the short video P is used as an example. When replacing the imageview control on the interface of the chat application with the surfaceview control in response to the operation of detecting that the user taps the open button 1202, the terminal device may adjust the layout size of the surfaceview control to be greater than the layout size of the imageview control. Then, when the terminal device assigns the surface of the surfaceview control to the surface on which the application A displays the short video P, the short video P is magnified and displayed on the interface of the chat application relative to the thumbnail 1201 corresponding to the link of the short video P. It should be understood that the magnification herein means that an area occupied by the short video P on the interface of the chat application is greater than an area occupied by the thumbnail 1201 corresponding to the link of the short video P on the interface of the chat application.

In some embodiments, after the terminal device replaces the view control at the position of the first link on the interface of the first application with the surfaceview control, or adds the surfaceview control to the interface of the first application, when the terminal device assigns the surface of the surfaceview control to the surface on which the second application displays the access page of the first link (that is, the specific content corresponding to the first link), the terminal device may further adaptively adjust a layout size of the surfaceview control based on the access page of the first link. For example, the scenario of the short video P is used as an example. When the terminal device assigns the surface of the surfaceview control to the surface on which the application A displays the short video P, if the short video P is in landscape mode, the terminal device may adjust a size ratio of a horizontal direction to a vertical direction of the surfaceview control based on a size ratio between a horizontal direction and a vertical direction of the short video P, so that a size of the horizontal direction of the surfaceview control is greater than a size of the vertical direction. If the short video P is in portrait mode, the terminal device may adjust the size ratio of the horizontal direction to the vertical direction of the surfaceview control based on the size ratio of the horizontal direction to the vertical direction of the short video P, so that the size of the vertical direction of the surfaceview control is greater than the size of the horizontal direction.

In some possible scenarios, when the terminal device embeds the access page of the first link in the interface of the first application for display, the terminal device may control the interface of the first application to slide up or down in response to a slide-up or slide-down operation of the user, or the terminal device may automatically slide the interface of the first application based on an increase of other content on the interface of the first application. When the interface of the first application slides up or down, the access page of the first link that is embedded in the interface of the first application for display may move out of the screen of the terminal device as the interface of the first application slides.

The scenario of the short video P is used as an example. When the terminal device embeds the short video P in the interface of the chat application for display, the user may slide up or down the interface of the chat application to view more chat information. Alternatively, when the user continues to chat on the interface of the chat application, as chat information increases, the interface of the chat application slides down. When the interface of the chat application slides up or down, the short video P embedded in the interface of the chat application for display may move out of the screen of the terminal device as the interface of the chat application slides.

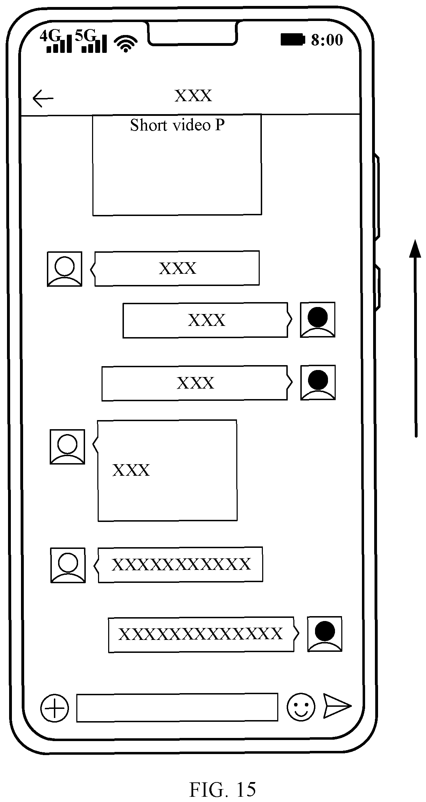

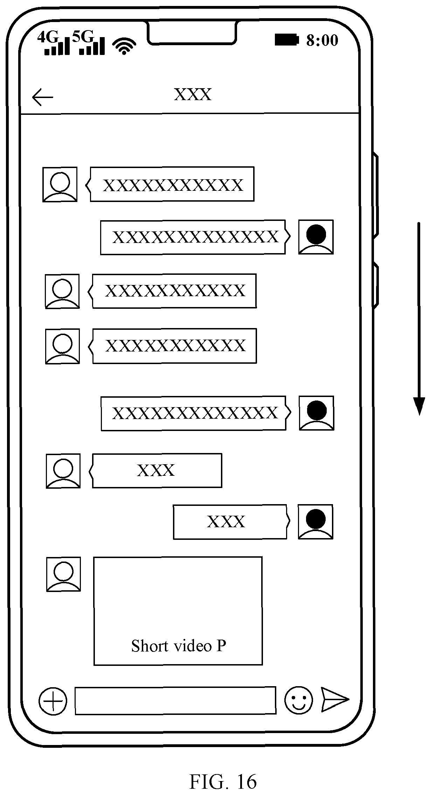

For example, FIG. 15 is a schematic diagram of sliding up the interface of the chat application when the short video P is embedded in the interface of the chat application for display according to an embodiment of this application. As shown in FIG. 15, when the interface of the chat application slides up, the short video P moves out of the screen of the terminal device from the top (top) of the interface of the chat application. FIG. 16 is a schematic diagram of sliding down an interface of a chat application when a short video P is embedded in an interface of a chat application for display according to an embodiment of this application. As shown in FIG. 16, when the interface of the chat application slides down, the short video P moves out of the screen of the terminal device from the bottom (bottom) of the interface of the chat application.

For a scenario in which the access page of the first link is moved out of the screen of the terminal device because of sliding of the interface of the first application when the access page of the first link is embedded in the interface of the first application for display, in this embodiment of this application, the terminal device (or the first application) may monitor a position (or an offset value) of the surfaceview control on the interface of the first application. When the interface of the first application slides up, the terminal device may detect whether an upper edge of the surfaceview control is offset to a screen boundary (that is, a screen edge). When the interface of the first application slides down, the terminal device may detect whether a lower edge of the surfaceview control is shifted (that is, moved) to a screen boundary. If the terminal device detects that the upper edge or the lower edge of the surfaceview control is offset to the screen boundary, the terminal device may obtain a position and a size of the surfaceview control relative to the screen, and add a surface whose position and size are the same as those of the surfaceview control relative to the screen at the system layer based on the position and the size of the surfaceview control relative to the screen (for ease of description, the surface may be referred to as a floating surface, that is, a floating interface). Then, the terminal device may assign the floating surface to the surface on which the second application displays the access page of the first link. In this case, the access page of the first link is drawn on the floating surface for display. In other words, the access page of the first link may be switched from being embedded in the interface of the first application for display to floating on the interface of the first application for display. Because the access page of the first link floats on the interface of the first application for display, the access page of the first link does not move out of the screen of the terminal device as the interface of the first application slides up or down.

For example, when the operating system of the terminal device is an Android system, a manner in which the terminal device obtains the position and the size of the surfaceview control relative to the screen may include: The terminal device obtains the position of the surfaceview control relative to the screen by using a View.getLocationOnScreen method, and obtains the size of the surfaceview control by using getWidth and getHeight methods (or functions). Similarly, when the operating system of the terminal device is another operating system, the terminal device may obtain the position and size of the surfaceview control relative to the screen in a similar manner. The scenario of the short video P is used as an example. When the terminal device embeds the short video P in the interface of the chat application for display, the terminal device may listen to a position (or an offset value) of the surfaceview control on the interface of the chat application. When the interface of the chat application slides up, the terminal device may detect whether the upper edge of the surfaceview control is offset to the screen boundary. When the interface of the chat application slides down, the terminal device may detect whether the lower edge of the surfaceview control is offset to the screen boundary. If the terminal device detects that the upper edge or the lower edge of the surfaceview control is offset to the screen boundary, the terminal device may obtain the position and the size of the surfaceview control relative to the screen, and add, based on the position and size of the surfaceview control relative to the screen, a floating surface whose position and size are the same as those of the surfaceview control relative to the screen to the system layer. Then, the terminal device may assign the floating surface to a surface on which the application A displays the short video P. In this case, the short video P is drawn on the floating surface for display, that is, the short video P may be switched from being embedded in the interface of the chat application for display to floating on the interface of the chat application for display.

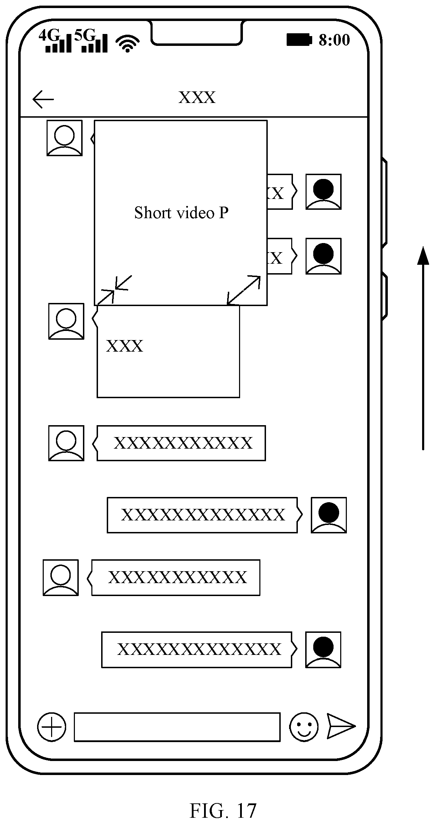

For example, FIG. 17 is a schematic diagram of a short video P floating on an interface of a chat application for display when an interface of a chat application slides up according to an embodiment of this application. As shown in FIG. 17, when the interface of the chat application slides up, if the upper edge of the surfaceview control corresponding to the short video P is offset to the screen boundary, the short video P may be switched from being embedded in the interface of the chat application for display to floating on the interface of the chat application for display. In this case, the short video P does not move out of the screen of the terminal device as the interface of the chat application continues to slide up.

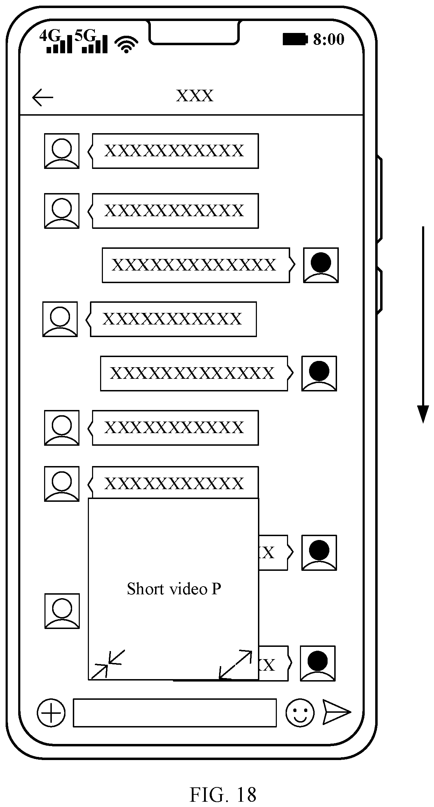

For example, FIG. 18 is a schematic diagram of a short video P floating on an interface of a chat application for display when an interface of a chat application slides down according to an embodiment of this application. As shown in FIG. 18, when the interface of the chat application slides down, if the lower edge of the surfaceview control corresponding to the short video P is offset to the screen boundary, the short video P may alternatively be switched from being embedded in the interface of the chat application for display to floating on the interface of the chat application for display. In this case, the short video P does not move out of the screen of the terminal device as the interface of the chat application continues to slide down.

In some embodiments, when the access page of the first link is switched from being embedded in the interface of the first application for display to floating on the interface of the first application for display, the terminal device may continue to listen to a position of the surfaceview control on the interface of the first application. For the foregoing scenario in which the interface of the first application slides up, if the interface of the first application changes from sliding up to sliding down, the terminal device may detect whether the upper edge of the surfaceview control is far away from the screen boundary (a top of the screen). For the foregoing scenario in which the interface of the first application slides down, if the interface of the first application changes from sliding down to sliding up, the terminal device may detect whether the lower edge of the surfaceview control is far away from the screen boundary (the bottom of the screen). If the terminal device detects that the upper edge of the surfaceview control is far away from the top of the screen or the lower edge is far away from the bottom of the screen, the terminal device may reassign the surface of the surfaceview control to the surface on which the second application displays the access page of the first link, so that the access page of the first link is switched from floating on the interface of the first application for display to being embedded in the interface of the first application for display.

For example, for the scenario shown in FIG. 17, when the interface of the chat application changes from sliding up to sliding down, if the upper edge of the surfaceview control corresponding to the short video P is far away from the top of the screen, the short video P may be switched from floating on the interface of the chat application for display to being embedded in the interface of the chat application for display. For the scenario shown in FIG. 18, when the interface of the chat application changes from sliding down to sliding up, if the lower edge of the surfaceview control corresponding to the short video P is far away from the bottom of the screen, the short video P may also be switched from floating on the interface of the chat application for display to being embedded in the interface of the chat application for display.

Optionally, when the access page of the first link floats on the interface of the first application for display, the access page of the first link or the interface of the first application may also include the full-screen button, the minimization button, the close button, and the like mentioned in the foregoing embodiment. Details are not described again.

It may be understood that, when the access page of the first link floats on the interface of the first application for display, the access page of the first link may block some areas of the interface of the first application, and some other elements that the user expects to use or browse on the interface of the first application may be blocked. Some other operations performed by the user on the interface of the first application are affected to some extent. For example, when the short video P floats on the interface of the chat application for display, if the user opens the input keyboard to input a text into the chat box, the short video P may block the chat box, or even block the input keyboard (the chat box and the input keyboard are other elements).

Therefore, in this embodiment of this application, when the access page of the first link floats on the interface of the first application for display, the terminal device may dynamically adjust, based on a position relationship between another element (for example, a first element) on the interface of the first application and the access page (which may be referred to as a floating window) of the first link that is being displayed in floating mode, a size of the access page of the first link that is being displayed in floating mode, to prevent the another element on the interface of the first application from being blocked, so that the user can perform some other operations on the interface of the first application while browsing the access page of the first link that is being displayed in floating mode. When the size of the access page of the first link that is being displayed in floating mode is dynamically adjusted, the size of the access page of the first link may be related to the first element.

For example, that the access page of the first link is the short video P is used as an example. The short video P floats on the interface of the chat application for display, and when the user opens the input keyboard to enter a text into the chat box, the terminal device may dynamically adjust, based on a position relationship between the chat box and the floating window of the short video P, a size of the floating window of the short video P, so as to avoid that the chat box is blocked by the floating window of the short video P. When browsing the short video P, the user can continue to enter a text into the chat box on the interface of the chat application to chat. The chat box may be the foregoing first element, and a size of a floating window of the short video P is related to the chat box.

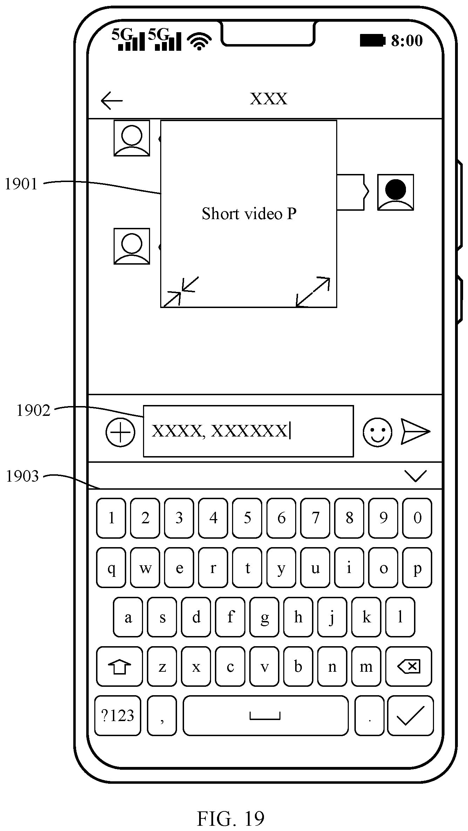

For example, FIG. 19 to FIG. 21 are three schematic diagrams of an interface of a chat application according to an embodiment of this application. With reference to FIG. 19 to FIG. 21, the following describes a process and a specific principle in which the terminal device dynamically adjusts the size of the floating window of the short video P according to a position relationship between the chat box and the floating window of the short video P.

Refer to FIG. 19. When the floating window 1901 of the short video P floats on the interface of the chat application, the user may open the input keyboard 1903 to enter a text into the chat box 1902.

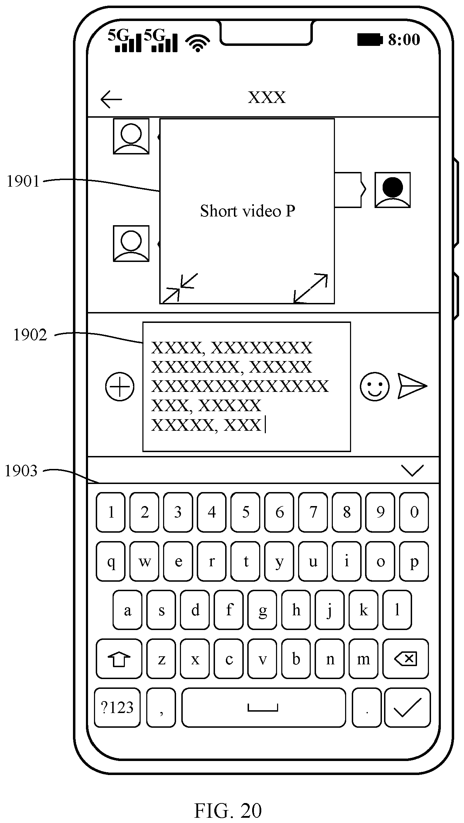

Refer to FIG. 20. In a process in which the user opens the input keyboard 1903 to input a text into the chat box 1902, the chat box 1902 gradually increases as the input text increases. When the chat box 1902 gradually increases, an upper edge of the chat box 1902 gradually approaches the floating window 1901 of the short video P.

In this embodiment of this application, in a process in which the chat box 1902 gradually increases as the input text increases, when the upper edge of the chat box 1902 approaches the floating window 1901 of the short video P, or when a distance between the upper edge of the chat box 1902 and a lower edge of the floating window 1901 of the short video P is less than a threshold (for example, 1 millimeter (mm), 2 mm, or one pixel), if the chat box 1902 continues to increase, the terminal device may squeeze (or scale down) the size of the floating window 1901 of the short video P as the chat box 1902 increases. For example, each time the chat box 1902 increases by 1 mm, the terminal device may adjust the lower edge of the floating window 1901 of the short video P to decrease by 1 mm.

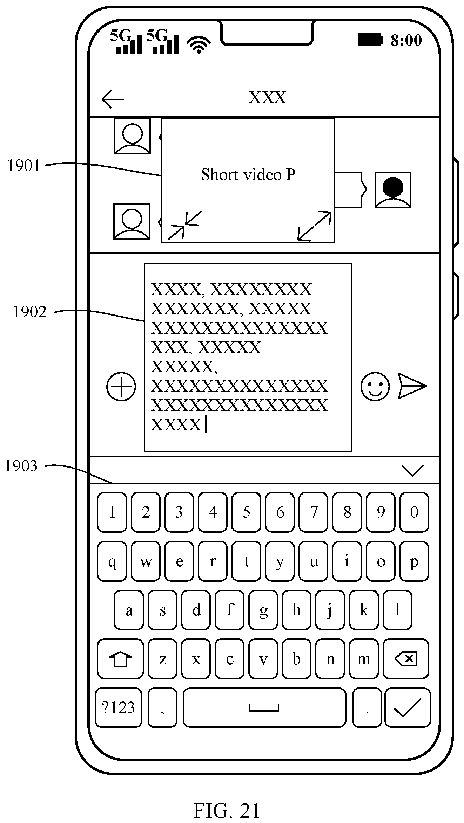

For an effect of dynamically adjusting the size of the floating window 1901 of the short video P, refer to FIG. 21. As shown in FIG. 21, in a process in which the chat box 1902 gradually increases as the input text increases, the terminal device dynamically adjusts, in the foregoing manner, the size of the floating window 1901 of the short video P based on a position relationship between the chat box 1902 and the floating window 1901 of the short video P, so that the floating window 1901 of the short video P may not block the chat box 1902.

As described above, floating display of the access page of the first link is implemented on the interface of the first application by using the floating surface. In this embodiment of this application, the terminal device may adjust, by adjusting the size of the floating surface, the size of the access page of the first link that is being displayed in floating mode.

It should be noted that, with reference to an example in which the user receives the link of the short video P in the application A and taps the link to view the short video P in a process of chatting by using the chat application, the display method provided in embodiments of this application is described above. However, it should be understood that, although the foregoing description is described by using an example in which the terminal device displays, on the interface of the chat application, the thumbnail corresponding to the link of the short video P and the open button of the link of the short video P, a manner of displaying the link of the short video P by the terminal device is not limited in this application.

For example, in some embodiments, a manner in which the terminal device displays the link of the short video P may alternatively be displaying a URI in a text form or a card form and an open button of the link of the short video P.

For another example, in some other embodiments, the terminal device may display only the thumbnail corresponding to the link of the short video P, or the URI existing in the text form or the card form, and does not display the open button of the link of the short video P. However, the thumbnail corresponding to the link of the short video P, or the URI in the text form or the card form may be used as the open button. When the user taps the thumbnail corresponding to the link of the short video P, or the URI in the text form or the card form, the terminal device may be triggered to detect the operation of opening the link of the short video P by the user.

In the foregoing embodiment, an example in which the first application is a chat application is used for description. In some other embodiments, when the first application is another application that has an information sending and receiving function, for example, a mailbox (or referred to as an email), or an SMS message, various implementations mentioned in the foregoing embodiment are also applicable.

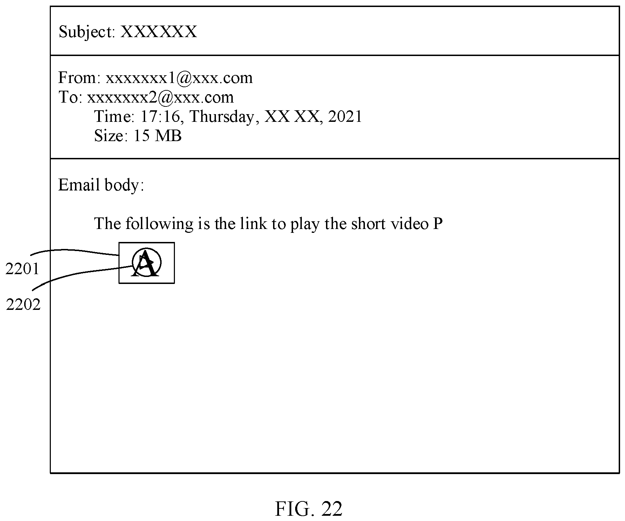

For example, that the first application is a mailbox and the second application is the foregoing application A is used as an example. It is assumed that the mailbox receives the link that is of the short video P in the application A and that is sent by another user by using an email. After the user opens the email, the link of the short video P may be displayed on an interface of the mailbox. For example, FIG. 22 is a schematic diagram of an interface of a mailbox according to an embodiment of this application. As shown in FIG. 22, in some embodiments, a manner in which the terminal device displays the link of the short video P on the interface of the mailbox may be the same as a manner in which the link of the short video P is displayed on the interface of the chat application.

The terminal device may display the thumbnail 2201 corresponding to the link of the short video P and the open button 2202 of the link of the short video P on the interface of the mailbox. When the user taps the open button 2202 shown in FIG. 22 (for example, clicking the open button 2202 by using a mouse), the terminal device may access, by using the application A, the URI included in the link of the short video P in response to an operation of detecting that the user taps the open button 2202, and display the short video P embedded in the interface of the mailbox (a specific principle is the same as that in the foregoing embodiment).

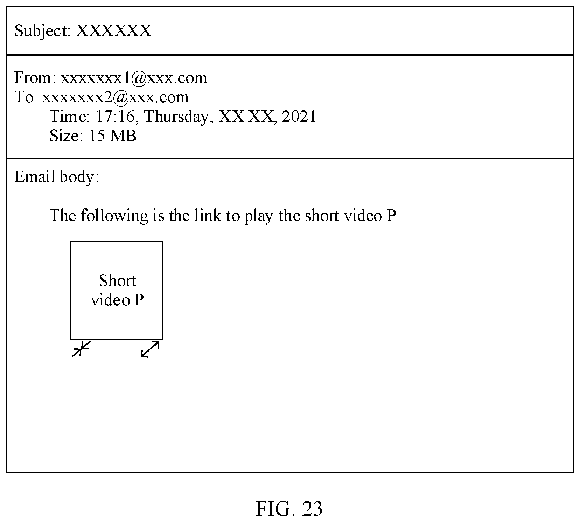

For example, FIG. 23 is a schematic diagram of an effect of a short video P embedded in an interface of a mailbox for display according to an embodiment of this application. As shown in FIG. 23, when the short video P is embedded in the interface of the mailbox for display, the interface of the mailbox is not blocked by the short video P.

Similarly, other embodiments provided by using the chat application as an example are also applicable to a scenario in which the first application is a mailbox. Details are not described herein again.

In still some embodiments, the first application in this embodiment of this application may alternatively refer to a notification bar (the notification bar may also be referred to as a status bar) of the terminal device (such as a mobile phone or a computer). The notification bar may include notifications such as information that carries the URI, a software update reminder, and a push message. These notifications may also be referred to as links, and the second application may be an application that can open a notification in the notification bar. For example, if the notification bar includes a notification B, and the notification B is a push message pushed by the application B, the second application may be the application B or a default browser.

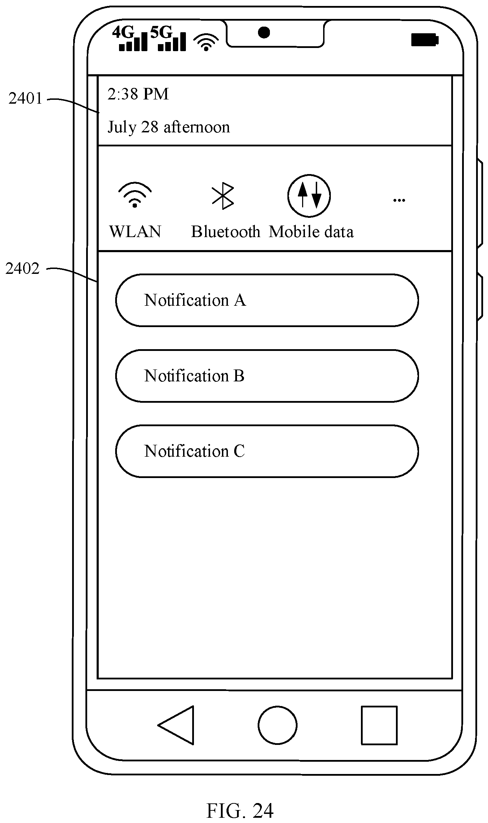

For example, the first application is a status bar of a mobile phone. FIG. 24 is a schematic diagram of an interface of a status bar of a mobile phone according to an embodiment of this application. As shown in FIG. 24, the mobile phone may display a status bar 2402 in a drop-down interface 2401. The drop-down interface is a display interface that appears after a top of a main interface (or referred to as a desktop) of the mobile phone is slid down. Keys of functions commonly used by the user, such as WLAN and Bluetooth, may be displayed on the drop-down interface, so that the user can quickly use a related function. For example, when the current display interface of the mobile phone is the desktop, the user may perform a slide-down operation on the top of the screen of the mobile phone, to trigger the mobile phone to switch the display interface from the desktop to the drop-down interface (or display the drop-down interface on the desktop in overlay mode).

The interface of the status bar 2402 may include notifications such as "Notification A", "Notification B", and "Notification C". It is assumed that the "Notification B" is a push message pushed by the application B, and the application B is installed on the mobile phone. When the user taps the "Notification B" in the status bar 2402, the mobile phone may replace, in response to an operation that the user taps the "Notification B" in the status bar 2402, the view control used to display the "Notification B" on the interface of the status bar 2402 with the surfaceview control, or add a surfaceview control to the interface of the status bar 2402. Herein, an example in which the view control used to display the "Notification B" on the interface of the status bar 2402 is replaced with the surfaceview control is used. The surfaceview control has a surface layer. In addition, the mobile phone may start the application B by using the startActivity method in response to the operation that the user taps the "Notification B" in the status bar 2402, and the application B may access the URI included in the "Notification B" to display specific content of the "Notification B".

When creating the surface on which the application B displays the specific content of the "Notification B", the mobile phone may assign the surface of the surfaceview control on the interface of the status bar 2402 to the surface on which the application B displays the specific content of the "Notification B". In this case, specific content of the "Notification B" is drawn on the surface of the surfaceview control on the interface of the status bar 2402 for display. In other words, specific content of the "Notification B" may be embedded in the interface of the status bar 2402 for display.

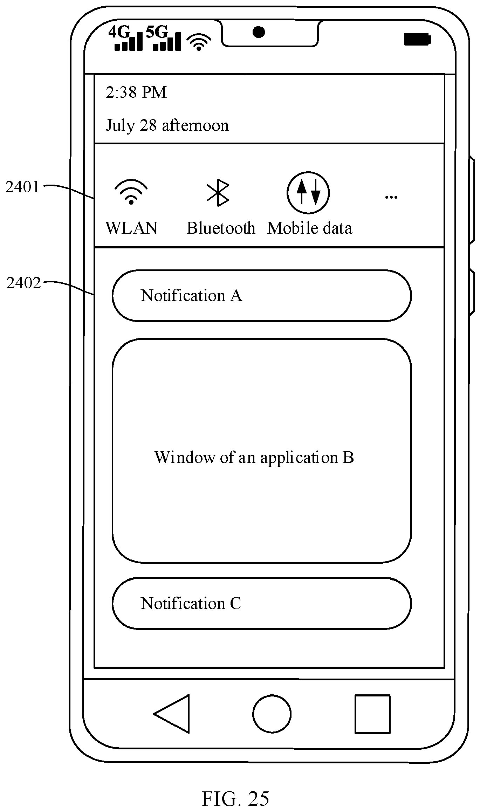

For example, FIG. 25 is a schematic diagram of an effect of displaying specific content of a "Notification B" embedded in an interface of a status bar according to an embodiment of this application. As shown in FIG. 25, the "Window of the application B" includes specific content of the "Notification B", and when the specific content of the "Notification B" is drawn on the surface of the surfaceview control on the interface of the status bar 2402 for display, the "Window of the application B" may be embedded in the interface of the status bar 2402. In this case, the user may browse the specific content of the "Notification B" on the interface of the status bar 2402, and the interface of the status bar 2402 is not blocked when the specific content of the "Notification B" is displayed.

In the scenarios shown in FIG. 24 and FIG. 25, the "Notification B" is the first link, and an operation of tapping the "Notification B" in the status bar 2402 by the user is an operation of opening the first link.

Similarly, other embodiments provided by using the chat application as an example are also applicable to a scenario in which the first application is a notification bar. Details are not described herein again.

In still some embodiments, the first application in this embodiment of this application may alternatively be a leftmost screen of the terminal device (for example, a mobile phone), and the leftmost screen may alternatively include recommendation information, for example, information that carries the URI or a push message, or service information, for example, a health service, a financial service, or a shopping service. The recommendation information, service information, and the like included in the leftmost screen may also be referred to as links. The first link may be one of the links, and the second application may be an application that can open a link in the leftmost screen. The leftmost screen is a display interface that appears after a main interface (or referred to as a desktop) of the mobile phone is swiped rightwards. The leftmost screen may display applications and functions commonly used by the user, services and information that are subscribed to by the user. This facilitates quick browsing and use by the user. For example, when the current display interface of the mobile phone is a desktop, the user may perform a rightward sliding operation on the screen of the mobile phone, to trigger the mobile phone to switch the display interface from the desktop to the leftmost screen.

It may be understood that the "Leftmost screen" is merely a term used in embodiments of this application, a meaning indicated by the "Leftmost screen" has been recorded in embodiments of this application, and a name of the "Leftmost screen" does not constitute any limitation on embodiments of this application. In addition, in some other embodiments, the "Leftmost screen" may also be referred to as another name such as a "Desktop assistant", a "Shortcut menu", or a "Widget set interface". This is not limited herein.

Similarly, other embodiments provided by using the chat application as an example are also applicable to a scenario in which the first application is the leftmost screen. Details are not described herein again.

In the foregoing embodiment, a scenario in which the first application is an application, for example, a chat application, a mailbox, a notification bar, or a leftmost screen is merely a scenario that can be implemented in this embodiment of this application. A specific type of the first application is not limited herein in this application.

In addition, it should be further noted that, in the foregoing embodiment, only a scenario in which the first link is the short video P or the "Notification B" is described, but it should be understood that: The foregoing embodiments are also applicable to a scenario in which the first link is a link of another type of data like a text, a picture, an audio, a video, or a web page. In other words, the technical solution in this embodiment of this application is applicable to a scenario in which the first link is a link of different types of data like a text, a picture, an audio, a short video or a video, or a web page. A specific type of the data corresponding to the first link is not limited herein.

It should be understood that the foregoing embodiments are merely examples of descriptions of the display method provided in embodiments of this application. In some other possible implementations, some execution steps may also be deleted or added in the foregoing embodiments, or a sequence of some steps in the foregoing embodiments may also be adjusted. This is not limited in this application.

Corresponding to that of the display method in the foregoing embodiments, an embodiment of this application provides a display apparatus. The apparatus may be applied to the foregoing terminal device, and is configured to implement the display method in the foregoing embodiments. A function of the apparatus may be implemented by hardware, or may be implemented by executing corresponding software by hardware. The hardware or software includes one or more modules or units corresponding to the steps in the foregoing display method.

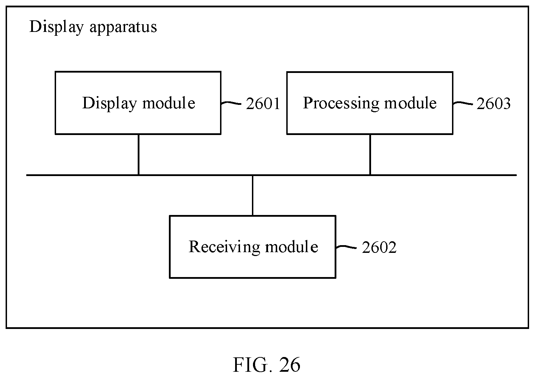

For example, FIG. 26 is a schematic diagram of a structure of a display apparatus according to an embodiment of this application. As shown in FIG. 26, the apparatus may include a display module 2601, a receiving module 2602, and a processing module 2603. The display module 2601, the receiving module 2602, and the processing module 2603 may be configured to cooperate to implement the display method described in the foregoing embodiment.

For example, the display module 2601 is configured to display an interface of a first application, where the interface of the first application includes a first link. The receiving module 2602 is configured to receive a first operation, where the first operation is an operation of opening the first link. The processing module 2603 is configured to obtain, in response to the first operation, the access page of the first link by using the second application, and display the access page of the first link on the interface of the first application by using the display module 2601.

In an implementation, the processing module 2603 is specifically configured to replace a picture at a position of the first link on the interface of the first application with the access page of the first link, so as to display the access page of the first link on the interface of the first application.

Optionally, the processing module 2603 is specifically configured to add the first surfaceview control to the interface of the first application, and assign the first interface of the first surfaceview control to the second interface created when the second application obtains the access page of the first link, so as to add the access page of the first link to the interface of the first application.

Alternatively, in another implementation, the processing module 2603 is specifically configured to add the access page of the first link to the interface of the first application, so as to display the access page of the first link on the interface of the first application.

Optionally, the processing module 2603 is specifically configured to add the first surfaceview control to the interface of the first application, and assign the first interface of the first surfaceview control to the second interface created when the second application obtains the access page of the first link, so as to add the access page of the first link to the interface of the first application.

In some implementations, the receiving module 2602 is further configured to receive a second operation, where the second operation is an operation of switching the access page of the first link for full-screen display, and the processing module 2603 is further configured to display, in response to the second operation, the access page of the first link in full screen by using the display module 2601.

Optionally, the processing module 2603 is specifically configured to: create a full-screen interface, and assign the full-screen interface to a second interface created when the second application obtains the access page of the first link, so as to display the access page of the first link in full screen.

Optionally, the receiving module 2602 is further configured to receive a third operation, where the third operation is an operation of canceling full-screen display of the access page of the first link; and the processing module 2603 is further configured to display, in response to the third operation, the access page of the first link on the interface of the first application by using the display module 2601.

In some implementations, when the access page of the first link is displayed on the interface of the first application, if the access page of the first link is moved to a screen boundary because of sliding up or sliding down of the interface of the first application, the processing module 2603 is further configured to display the access page of the first link in floating mode by using the display module 2601.

Optionally, the processing module 2603 is specifically configured to: create a floating interface, and assign the floating interface to the second interface created when the second application obtains the access page of the first link, so as to display the access page of the first link in floating mode.

Optionally, when the access page of the first link is displayed in floating mode, if the access page of the first link is far away from the screen boundary because of sliding up or sliding down of the interface of the first application, the processing module 2603 is further configured to display the access page of the first link on the interface of the first application by using the display module 2601.

Optionally, when the access page of the first link is displayed in floating mode, the processing module 2603 is further configured to dynamically adjust a size of the access page of the first link based on a position relationship between a first element on the interface of the first application and the access page of the first link, where the size of the access page of the first link is related to a size of the first element.

In some implementations, the receiving module 2602 is further configured to receive a fourth operation, where the fourth operation is an operation of closing the access page of the first link; and the processing module 2603 is further configured to: close the access page of the first link in response to the fourth operation, and skip displaying the access page of the first link on the interface of the first application by using the display module 2601.

Optionally, the processing module 2603 displays the access page of the first link on the interface of the first application by replacing the picture at the position of the first link on the interface of the first application with the access page of the first link; and the processing module 2603 is further configured to: after the access page of the first link is closed, re-display the first link on the interface of the first application by using the display module 2601.

Optionally, that the interface of the first application includes a first link means that the interface of the first application includes a thumbnail corresponding to the first link and/or an open button of the first link.

In some implementations, the thumbnail corresponding to the first link includes a thumbnail of the second application or a default thumbnail.

In some implementations, the second application includes an application corresponding to the first link, or a default application on the apparatus.

In some implementations, when the access page of the first link is displayed on the interface of the first application, an area occupied by the access page of the first link on the interface of the first application is greater than an area occupied by the first link on the interface of the first application. It should be understood that division into the modules (or referred to as units) in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the units in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

In an implementation, units used by the foregoing apparatus to implement corresponding steps in the foregoing methods may be implemented in a form of a processing element scheduling program. For example, the apparatus may include a processing element and a storage element, and the processing element invokes a program stored in the storage element, to perform the method described in the foregoing method embodiments. The storage element may be a storage element whose processing element is located on a same chip, that is, an on-chip storage element.

In another implementation, the program for performing the foregoing method may be in a storage element that is on a different chip from the processing element, namely, an off-chip storage element. In this case, the processing element invokes or loads the program from the off-chip storage element to the on-chip storage element, to invoke and perform the method described in the foregoing method embodiments.

Embodiments of this application further provide an electronic device. The electronic device may be the terminal device in the first aspect. The electronic device includes: a processor, and a memory configured to store processor-executable instructions. When the processor is configured to execute the instructions, the electronic device is enabled to implement the method described in the foregoing embodiment. The memory may be located inside the electronic device, or may be located outside the electronic device. There are one or more processors.

For example, the electronic device may be a mobile phone, or may be a tablet computer, a wearable device, a vehicle-mounted device, an AR/VR device, a notebook computer, a UMPC, a netbook, a PDA, or the like.

In still another implementation, a unit used by the electronic device to implement each step in the foregoing method may be configured as one or more processing elements. The processing element herein may be an integrated circuit, for example, one or more ASICs, one or more DSPs, or one or more FPGAs, or a combination of these class integrated circuits. These integrated circuits may be integrated together to form a chip.

For example, an embodiment of this application further provides a chip. The chip may be applied to the foregoing electronic device. The chip includes one or more interface circuits and one or more processors. The interface circuit and the processor are interconnected by using a line. The processor receives and executes computer instructions from the memory of the electronic device by using the interface circuit, to implement the method described in the foregoing embodiment.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium.

Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application further provides a computer-readable storage medium, and the computer-readable storage medium stores computer program instructions. When the computer program instructions are executed by the electronic device, the electronic device is enabled to implement the method described in the embodiment.

For another example, an embodiment of this application further provides a computer program product, including computer-readable code or a non-volatile computer-readable storage medium that carries computer-readable code. When the computer-readable code is run in an electronic device, a processor in the electronic device implements the method described in the foregoing embodiment.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A display method, wherein the method comprises:
displaying, by a terminal device, an interface of a first application, wherein the interface of the first application comprises a first link;
receiving, by the terminal device, a first operation, wherein the first operation is an operation of opening the first link; and
obtaining, by the terminal device in response to the first operation, an access page of the first link by using a second application, and displaying the access page of the first link on the interface of the first application.

2. The method according to claim 1, wherein the displaying, by the terminal device, the access page of the first link on the interface of the first application comprises:
replacing, by the terminal device, a picture at a position of the first link on the interface of the first application with the access page of the first link, or adding, by the terminal device, the access page of the first link to the interface of the first application.

3. The method according to claim 2, wherein the replacing, by the terminal device, a picture at a position of the first link on the interface of the first application with the access page of the first link comprises:
replacing, by the terminal device, a view control at the position of the first link on the interface of the first application with a first surfaceview control; and
assigning, by the terminal device, a first interface of the first surfaceview control to a second interface created when the second application obtains the access page of the first link.

4. The method according to claim 2, wherein the adding, by the terminal device, the access page of the first link to the interface of the first application comprises:
adding, by the terminal device, a first surfaceview control to the interface of the first application; and
assigning, by the terminal device, a first interface of the first surfaceview control to a second interface created when the second application obtains the access page of the first link.

5. The method according to any one of claims 1 to 4, wherein the method further comprises:
receiving, by the terminal device, a second operation, wherein the second operation is an operation of switching the access page of the first link for full-screen display; and
displaying, by the terminal device, the access page of the first link in full screen in response to the second operation.

6. The method according to claim 5, wherein the displaying, by the terminal device, the access page of the first link in full screen comprises:
creating, by the terminal device, a full-screen interface, and assigning the full-screen interface to the second interface created when the second application obtains the access page of the first link.

7. The method according to claim 5 or 6, wherein the method further comprises:
receiving, by the terminal device, a third operation, wherein the third operation is an operation of canceling full-screen display of the access page of the first link; and
displaying, by the terminal device, the access page of the first link on the interface of the first application in response to the third operation.

8. The method according to any one of claims 1 to 7, wherein the method further comprises:
when the access page of the first link is displayed on the interface of the first application, if the access page of the first link is moved to a screen boundary because of sliding up or sliding down of the interface of the first application, displaying, by the terminal device, the access page of the first link in floating mode.

9. The method according to claim 8, wherein the displaying, by the terminal device, the access page of the first link in floating mode comprises:
creating, by the terminal device, a floating interface, and assigning the floating interface to the second interface created when the second application obtains the access page of the first link.

10. The method according to claim 8 or 9, wherein the method further comprises:
when the access page of the first link is displayed in floating mode, if the access page of the first link is far away from the screen boundary because of sliding up or sliding down of the interface of the first application, displaying, by the terminal device, the access page of the first link on the interface of the first application.

11. The method according to any one of claims 8 to 10, wherein the method further comprises:
when the access page of the first link is displayed in floating mode, dynamically adjusting, by the terminal device, a size of the access page of the first link based on a position relationship between a first element on the interface of the first application and the access page of the first link, wherein
the size of the access page of the first link is related to a size of the first element.

12. The method according to any one of claims 1 to 11, wherein the method further comprises:
receiving, by the terminal device, a fourth operation, wherein the fourth operation is an operation of closing the access page of the first link; and
closing, by the terminal device, the access page of the first link in response to the fourth operation, and skipping displaying the access page of the first link on the interface of the first application.

13. The method according to claim 12, wherein the terminal device displays the access page of the first link on the interface of the first application by replacing the picture at the position of the first link on the interface of the first application with the access page of the first link; and after the closing, by the terminal device, the access page of the first link, the method further comprises:
re-displaying, by the terminal device, the first link on the interface of the first application.

14. The method according to any one of claims 1 to 13, wherein that the interface of the first application comprises a first link means that the interface of the first application comprises a thumbnail corresponding to the first link and/or an open button of the first link.

15. The method according to claim 14, wherein the thumbnail corresponding to the first link comprises a thumbnail of the second application or a default thumbnail.

16. The method according to any one of claims 1 to 15, wherein the second application comprises an application corresponding to the first link, or a default application on the terminal device.

17. The method according to any one of claims 1 to 16, wherein when the access page of the first link is displayed on the interface of the first application, an area occupied by the access page of the first link on the interface of the first application is greater than an area occupied by the first link on the interface of the first application.

18. A display apparatus, wherein the apparatus comprises:
a display module, configured to display an interface of a first application, wherein the interface of the first application comprises a first link;
a receiving module, configured to receive a first operation, wherein the first operation is an operation of opening the first link; and
a processing module, configured to obtain, in response to the first operation, an access page of the first link by using a second application, and display the access page of the first link on the interface of the first application.

19. An electronic device, comprising a processor and a memory configured to store processor-executable instructions, wherein
when the processor is configured to execute the instructions, the electronic device is enabled to implement the method according to any one of claims 1 to 17.

20. A computer-readable storage medium, wherein the computer-readable storage medium stores computer program instructions, and when the computer program instructions are executed by an electronic device, the electronic device is enabled to implement the method according to any one of claims 1 to 17.

21. A computer program product, comprising computer-readable code or a non-volatile computer-readable storage medium that carries computer-readable code, wherein when the computer-readable code is run in an electronic device, a processor in the electronic device implements the method according to any one of claims 1 to 17.
